# EUROPEAN PATENT APPLICATION

(11) **EP 4 716 208 A1**
(43) Date of publication of application: **25.03.2026**
(21) Application number: 25202789.1
(22) Date of filing: 17.09.2025
(51) Int. Cl.: H04N 7/18, G06T 7/20

(54) **TRANSMISSION OF PARAMETERS IN A VIDEO COMMUNICATION SYSTEM FOR FAULT MANAGEMENT PURPOSES**

(30) Priority: 24.09.2024 SE 2450953
(71) Applicant: Topgolf Sweden AB, 182 33 Danderyd (SE)
(72) Inventor: VON SCHENCK, Ludvig Wilhelm, 167 44 Bromma (SE); FORSGREN, Daniel, 182 46 Enebyberg (SE); LINGVALL, Kristoffer Uggla, 169 60 Solna (SE); SEVELIN, Elias, 141 48 Huddinge (SE); KINDBERG, Ludvig, 169 59 Solna (SE)
(74) Representative: Fish & Richardson P.C.

(57) **Abstract**

A method and a tracking managing subsystem (111) for enabling management of faults relating to the tracking managing subsystem (111) and a tracking assembly (115) communicatively connected thereto. The method comprises obtaining (B110), from the tracking assembly (115), a tracking stream, which comprises tracking data maps, and obtaining (B120) a set of system parameters. The method further comprises deriving (B130) a set of blobs by applying a blob detection procedure to at least two tracking data maps of the tracking stream, and sending (B140) the set of blobs and the set of system parameters.

## Description

### TECHNICAL FIELD

The embodiments herein relate to transmission of parameters within a video communication system, such as between a capturing subsystem, including one or more tracking assemblies and/or one or more video cameras, and a rendering subsystem, e.g. capable of producing a video stream, including a rendered trace illustrating movement of a sports projectile, such as a golf ball. In particular, a method and a tracking managing subsystem for providing blobs relating to tracking of sports projectile as well as a method and a tracking managing subsystem for enabling management of faults relating to the tracking managing subsystem and a tracking assembly are disclosed. Furthermore, corresponding computer program(s), carrier(s) therefor and a video communication system are also disclosed.

### BACKGROUND

During a golf event, it is often desired to broadcast video from e.g. a tee, at which a player may swing a golfclub to shoot a golf ball towards e.g. a flag, a hole, out onto a range, a field or the like. Further, it is possible to also show, in the video, a trace that indicates a path of movement of the golf ball that has been hit by a player. This enhances the experience for viewers of the video.

Maintaining a seamless operation of a tracking system, enabling rendering of the trace, enables delivery of an uninterrupted and high-quality video stream, which thus improves the viewer's experience. The tracking system, which typically comprises a tracking equipment and associated tracking assemblies, are integral in the precise positioning and movement synchronization required for capturing and producing the video streams. Any fault or failure within these systems can lead to disruptions, affecting the viewer's engagement and overall satisfaction with the broadcast of the golf event.

Traditional tracking managing subsystems face significant challenges in fault management. Current methods often involve manual diagnostics and troubleshooting, e.g. in response to an interruption of the broadcast stream. Manual diagnostics and troubleshooting can typically be time-consuming, be prone to errors, and require rare skills. This approach thus not only delays fault resolution but also increases the risk of prolonged system downtimes, thereby negatively impacting the continuity and quality of the video stream, fed to viewers. The continuous operation of the tracking system is crucial for achieving an uninterrupted and enhanced viewer experience. Consequently, a problem is related to how to reduce, or even avoid, faults in the tracking system.

In a known setup, a golfer's shot can be captured by a video camera, and the golf ball's path in three-dimensional space, e.g. on the golf course, can be captured by a tracker, such as a tracking assembly, a radar, an image based tracking device, or the like. In order to track the golf ball, a tracking stream from the tracker is analyzed using a known blob detection procedure. Various blob detection procedures are known in the art, e.g. Laplacian of Gaussian (LoG), Difference of Gaussians (DoG), spatio-temporal blob detectors, affine-adapted differential blob detectors, maximally stable extremal region detectors, Hessian-based blob detectors, or the like.

In order to render the trace of the golf ball in a video stream from the broadcast camera, a transformation from a coordinate system of the tracking stream to the coordinate system of the video stream is required. The transformation can be achieved by calibrating the tracking assembly to the broadcast camera, e.g. by using points identifiable in both the tracking stream and the broadcast stream, according to known manners, e.g. stereo calibration, 1D/2D/3D reference object-based calibration, or the like. Once the calibration has been performed, it is possible to map points in the tracking stream to points in the video stream, e.g. to be able to render a trace of a tracked object. The established calibration is valid as long as the spatial relationship, e.g. position and orientation, between the broadcast camera and the tracking assembly remains intact and focus and/or zoom of the tracking assembly and the broadcast camera are unchanged. A disadvantage is thus that the calibration needs to be performed again, as soon as e.g. the spatial relationship is disturbed and/or if focus and/or zoom of the tracking assembly and/or the broadcast camera is changed. Since calibration can be a time consuming and cumbersome process, this severely limits operational freedom for an operator of the broadcast camera. With increased operational freedom for the operator, the operator may be able to provide a video stream, with a trace, that is even more attractive to the viewers.

### SUMMARY

An object may be to overcome, or at least reduce, one or more of the abovementioned problems and/or disadvantages.

This, and other object, may be achieved by the solutions set forth in the appended independent claims.

According to an aspect, there is provided a method, performed by a tracking managing subsystem, for providing blobs relating to tracking of a sports projectile. The tracking managing subsystem is communicatively connected to a tracking assembly. The method comprising:
- obtaining a tracking stream including tracking data maps associated with timestamps from the tracking assembly,
- obtaining a set of transform parameters, including one of:
   - a tracking spatial parameter related to translation and/or orientation of the tracking assembly, associated with one or more timestamps,
   - a tracking focus parameter related to focal length of the tracking assembly, associated with one or more timestamps,
   - a lens model parameter relating to a model of a lens of the video camera,
   - a tracking sensor size parameter related to the size of a detection sensor of the tracking assembly,
   - a resolution parameter related to the resolution of a detection sensor of the tracking assembly,
   - a video spatial parameter related to translation and/or orientation of a video camera, associated with one or more timestamps,
   - a video focus parameter related to focal length of the video camera, associated with one or more timestamps,
   - a video sensor size parameter relating to a size of an image sensor of the video camera, or
   - a combination of two or more thereof,
- deriving a set of blobs by applying a blob detection procedure to at least two tracking data maps of the tracking stream, and
- sending the set of blobs and the set of transform parameters to a rendering subsystem, thereby enabling adaptation of a transformation between the video camera and the tracking assembly based on the set of transform parameters.

In this manner, adjustment of a transformation between the tracking assembly and the video camera is enabled. In particular, the transmitted one or more transform parameters of the set of transform parameters can be used by the rendering subsystem to adjust and/or re-calibrate from one frame to another frame in the tracking stream in view of changing conditions, such as zoom, position, orientation, and/or the like, at the video camera and/or the tracking assembly and/or the tracking managing subsystem. The changing conditions can thus be reflected by the set of transform parameters. As a result, increased operational freedom for the operator and/or an improved viewer experience can be achieved.

In some embodiments, the method is performed by a video communication system comprising the tracking managing subsystem, a rendering subsystem, and a video camera. The set of transform parameters comprises the video spatial parameter and/or the video focus parameter. The method further comprises:
- adapting an initial transformation between a tracking coordinate system of the tracking assembly and a video coordinate system of the video camera based on one or more transform parameters to obtain an adapted transformation.

In some embodiments, the deriving of the set of blobs is based on one of:
- the tracking spatial parameter and the associated one or more timestamps, when the set of transform parameters includes the tracking spatial parameter,
- the tracking focus parameter and the associated one or more timestamps, when the set of transform parameters includes the tracking focus parameter, or
- a combination thereof.

According to another aspect, there is provided a tracking managing subsystem configured for providing blobs relating to tracking of a sports projectile. The tracking managing subsystem is communicatively connected to a tracking assembly. The tracking managing subsystem is configured for:
obtaining, from the tracking assembly, a tracking stream including tracking data maps, which are associated with timestamps, wherein each tracking data map of the tracking data maps is associated with a respective timestamp of the timestamps,
obtaining a set of transform parameters, wherein the set of transform parameters includes one of:
   - a tracking spatial parameter relating to translation and/or orientation of the tracking assembly,
   - a tracking focus parameter relating to focal length of the tracking assembly,
   - an exposure parameter relating at least one exposure setting of the tracking assembly,
   - a lens model parameter relating to a model of a lens of the video camera,
   - a tracking sensor size parameter relating to a size of a detection sensor of the tracking assembly,
   - a resolution parameter relating to a resolution of a detection sensor of the tracking assembly,
   - a video spatial parameter relating to translation and/or orientation of a video camera, wherein the tracking managing subsystem is communicatively connected to the video camera,
   - a video focus parameter relating to focal length of a video camera (113), wherein the tracking managing subsystem is communicatively connected to the video camera,
   - a video sensor size parameter relating to a size of an image sensor of the video camera, or
   - a combination of two or more thereof,
      wherein each transform parameter of the set of transform parameters is associated with one or more of said timestamps,
deriving a set of blobs by applying a blob detection procedure to at least two tracking data maps of the tracking stream, while taking one or more transform parameters of the set of transform parameters into account and the associated one or more timestamps, and
sending the set of blobs and the set of transform parameters, e.g. to a rendering subsystem, whereby e.g. adaption, performed by the rendering subsystem, of a transformation between the video camera and the tracking assembly based on the set of transform parameters is enabled.

In some embodiments, the tracking managing subsystem is comprised in a video communication system, wherein the video communication system comprises a rendering subsystem, wherein the video communication system comprises a video camera or the video camera, when the set of transform parameters comprises the video spatial parameter and/or the video focus parameter, wherein a transformation is defined for transformation between a tracking coordinate system of the tracking assembly and a video coordinate system of the video camera, wherein the video communication system is configured for:
adapting, by the rendering subsystem, the transformation based on one or more transform parameters of the set of transform parameters to obtain an adapted transformation, e.g. applicable in connection with said one or more timestamps.

In general, the following embodiments are applicable to the aspects herein.

In some embodiments, the set of transform parameters includes the tracking spatial parameter.

In some embodiments, the set of transform parameters includes the tracking focus parameter.

In some embodiments, the set of transform parameters includes the lens model parameter.

In some embodiments, the set of transform parameters includes the tracking sensor size parameter.

In some embodiments, the set of transform parameters includes the resolution parameter.

In some embodiments, the set of transform parameters includes the video spatial parameter.

In some embodiments, the set of transform parameters includes the video focus parameter.

In some embodiments, the set of transform parameters includes the video sensor size parameter.

In some embodiments, two or more of the transform parameters above can be used in combination with each other.

According to other aspects, there is provided a computer program and a carrier therefor corresponding to the aspects above.

According to a further aspect, there is provided a method, performed by a tracking managing subsystem, for enabling management of faults relating to the tracking managing subsystem and a tracking assembly communicatively connected thereto, wherein the method comprises:
obtaining, from the tracking assembly, a tracking stream, which comprises tracking data maps,
obtaining a set of system parameters, wherein the set of system parameters includes one of:
   - a tracking managing subsystem processor-usage parameter relating to usage of one or more processors of the tracking managing subsystem,
   - a tracking managing subsystem temperature parameter relating to a temperature of the tracking managing subsystem,
   - a first power parameter relating power consumed by the tracking managing subsystem,
   - a first voltage parameter relating to voltage over the tracking managing subsystem,
   - an error parameter indicating error messages from the tracking assembly and the tracking managing subsystem, etc.,
   - a running processes parameter relating to number of running processes on the tracking managing subsystem,
   - a framerate parameter relating to framerate of the tracking assembly, e.g. camera framerate,
   - an exposure parameter relating at least one exposure setting of the tracking assembly,
   - a port parameter relating to port connection information of the tracking managing subsystem, e.g. which physical connector ports are occupied, and which physical connector ports are available,
   - a radar frequency parameter relating to a radar frequency of the tracking assembly,
   - a continuous wave parameter relating to radar CW disturbance of the tracking assembly,
   - a tracking assembly processor-usage parameter relating usage of one or more processors of the tracking assembly,
   - a tracking assembly temperature parameter relating a temperature of the tracking assembly,
   - a second power parameter relating power consumed by the tracking assembly,
   - a second voltage parameter relating to voltage over the tracking assembly, or
   - a combination of two or more thereof,
deriving a set of blobs by applying a blob detection procedure to at least two tracking data maps of the tracking stream,
sending the set of blobs and the set of system parameters, e.g. to a rendering subsystem, whereby e.g. fault management by the rendering subsystem is enabled.

In this manner, it is enabled that the rendering subsystem may analyze one or more of the system parameters, provided in the set of system parameters. Thus, enabling prevention and/or detection of errors or suboptimal operation in the tracking assembly and/or the video camera and/or the tracking managing subsystem.

In some embodiments, the method is performed by a video communication system, wherein the video communication system comprises the rendering subsystem. The method comprises:
analyzing, by the rendering subsystem, one or more system parameters of the set of system parameters to obtain one or more instructions concerning corrective actions, being reactive or proactive, to be performed, e.g. by the tracking managing subsystem, and
providing said one or more instructions, e.g. to an operator of the video communication system, the tracking managing subsystem, or the like.

In some embodiments, the analyzing of said one or more system parameters comprises comparing said one or more system parameters to one or more respective thresholds and determining said one or more instructions based on the comparison of said one or more system parameters to said one or more respective thresholds.

According to a yet other aspect, there is provided a tracking managing subsystem configured for enabling management of faults relating to the tracking managing subsystem and a tracking assembly communicatively connected thereto. The tracking managing subsystem is configured for:
obtaining, from the tracking assembly, a tracking stream, which comprises tracking data maps,
obtaining a set of system parameters, wherein the set of system parameters includes one of:
   - a tracking managing subsystem processor-usage parameter relating to usage of one or more processors of the tracking managing subsystem,
   - a tracking managing subsystem temperature parameter relating to a temperature of the tracking managing subsystem,
   - a first power parameter relating power consumed by the tracking managing subsystem,
   - a first voltage parameter relating to voltage over the tracking managing subsystem,
   - an error parameter indicating error messages from the tracking assembly and the tracking managing subsystem, etc.,
   - a running processes parameter relating to number of running processes on the tracking managing subsystem,
   - a framerate parameter relating to framerate of the tracking assembly, e.g. camera framerate,
   - an exposure parameter relating at least one exposure setting of the tracking assembly,
   - a port parameter relating to port connection information of the tracking managing subsystem, e.g. which physical connector ports are occupied, and which physical connector ports are available,
   - a radar frequency parameter relating to a radar frequency of the tracking assembly,
   - a continuous wave parameter relating to radar CW disturbance of the tracking assembly,
   - a tracking assembly processor-usage parameter relating usage of one or more processors of the tracking assembly,
   - a tracking assembly temperature parameter relating a temperature of the tracking assembly,
   - a second power parameter relating power consumed by the tracking assembly,
   - a second voltage parameter relating to voltage over the tracking assembly, or
   - a combination of two or more thereof,
deriving a set of blobs by applying a blob detection procedure to at least two tracking data maps of the tracking stream,
sending the set of blobs and the set of system parameters, e.g. to a rendering subsystem, whereby e.g. fault management by the rendering subsystem is enabled.

In some embodiments, the tracking managing subsystem is included in a video communication system, which includes a rendering subsystem, wherein the rendering subsystem is configured for
analyzing one or more system parameters of the set of system parameters to obtain one or more instructions concerning corrective actions, being reactive or proactive, to be performed, e.g. by the tracking managing subsystem, and
providing said one or more instructions, e.g. to an operator of the video communication system, the tracking managing subsystem, or the like.

In some embodiments, the tracking managing subsystem according to claim 20, wherein the rendering subsystem is configured for analyzing said one or more system parameters by comparing said one or more system parameters to one or more respective thresholds and determining said one or more instructions based on the comparison of said one or more system parameters to said one or more respective thresholds.

In general, the following embodiments are applicable to the aspects herein.

In some embodiments, the set of system parameters includes the tracking managing subsystem processor-usage parameter.

In some embodiments, the set of system parameters includes the tracking managing subsystem temperature parameter.

In some embodiments, the set of system parameters includes the first power parameter.

In some embodiments, the set of system parameters includes the first voltage parameter.

In some embodiments, the set of system parameters includes the error parameter.

In some embodiments, the set of system parameters includes the running processes parameter.

In some embodiments, the set of system parameters includes the framerate parameter.

In some embodiments, the set of system parameters includes the exposure parameter.

In some embodiments, the set of system parameters includes the port parameter.

In some embodiments, the set of system parameters includes the radar frequency parameter.

In some embodiments, the set of system parameters includes the continuous wave (CW) parameter.

In some embodiments, the set of system parameters includes the tracking assembly processor-usage parameter.

In some embodiments, the set of system parameters includes the tracking assembly temperature parameter.

In some embodiments, the set of system parameters includes the second power parameter.

In some embodiments, the set of system parameters includes the second voltage parameter.

In some embodiments, two or more of the system parameters above can be used in combination with each other.

According to still further aspect, there is provided a computer program and a carrier therefor corresponding to the aspects above.

### BRIEF DESCRIPTION OF THE DRAWINGS

Fig. 1a shows a first example of a system that tracks a golf ball and provides a video stream including a trace of the golf ball's trajectory.
Fig. 1b shows a second example of a system that tracks a golf ball and provides a video stream including a trace of the golf ball's trajectory.
Fig. 1c shows a third example of a system that tracks a golf ball and provides a video stream including a trace of the golf ball's trajectory.
Fig. 1d shows a fourth example of a system that tracks a golf ball and provides a video stream including a trace of the golf ball's trajectory.
Fig. 2 shows a first example of a process performed by a system that tracks a golf ball and provides a video stream including a trace of the golf ball's trajectory.
Fig. 3 shows a second example of a process performed by a system that tracks a golf ball and provides a video stream including a trace of the golf ball's trajectory.
Fig. 4 shows a schematic block diagram of embodiments of a capturing subsystem and/or tracking managing subsystem of a system that tracks a golf ball and provides a video stream including a trace of the golf ball's trajectory.
Fig. 5 shows a schematic block diagram of embodiments of a rendering subsystem of a system that tracks a golf ball and provides a video stream including a trace of the golf ball's trajectory.

### DETAILED DESCRIPTION

Throughout the following description, similar reference numerals have been used to denote similar features, such as nodes, actions, modules, circuits, parts, items, elements, units or the like, when applicable.

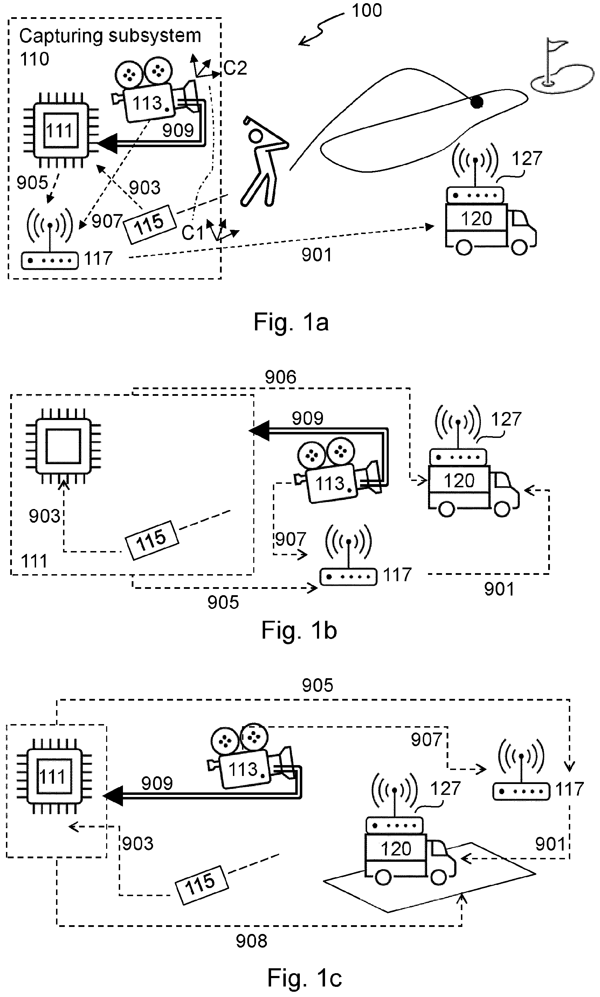

Figure 1a through Figure 1d show exemplifying systems 100 according to the embodiments herein. The system 100 can be configured to track a golf ball in flight, rolling and/or bouncing, and to provide a video stream including a trace of the golf ball's trajectory in an environment, such as a golf course, a golf range, a golf training area, an indoor golf training facility, or the like.

The system 100 includes a capturing subsystem 110 and a rendering subsystem 120.

The capturing subsystem 110 can be configured to capture a tracking stream, e.g. including tracking data maps, from which a trace of the golf ball can be derived. The capturing subsystem 110 may further be configured to capture a video stream, whose video frames may be provided, e.g. rendered in or on, or the like, with at least a portion of the trace, e.g. by the rendering subsystem 120.

The capturing subsystem 110 can include a tracking managing subsystem 111, such as a computing device, a computer, a mini-PC, a field CPU, a computing apparatus, a processing apparatus, a portable computing unit, or the like.

Furthermore, the capturing subsystem 110 can include a video camera 113, such as a broadcast camera, a camera, a camcorder, a video capturing device, or the like. The camera 113 may be configured to provide the video stream, which may be processable by the capturing subsystem 110 or forwarded to the rendering subsystem 120.

In some examples, the system 100 can be configured to monitor operation, e.g. of the capturing subsystem 110, the tracking managing subsystem 111, and/or the rendering subsystem 120.

The capturing subsystem 110 further comprises a tracking assembly 115. The tracking assembly 115 is configured to provide tracking data maps, such as tracking image frames, tracking frames, tracking data, radar tracking signals, lidar tracking signals, or the like, to the capturing subsystem 110, such as the tracking managing subsystem 111. In more detail, the tracking assembly 115 may comprise one or more of a radar, a lidar, a video capturing device, a camera, a videorecorder, a high-speed camera, a high-speed video recording device, a tracking sensor, a combination thereof, or the like. In this context, it may be noted that high-speed refers to an image capturing rate, often measured in frames per second (fps), of 500 fps, 1000 fps or more.

Notably, a lidar can typically provide tracking data in the form of distance data, e.g. distance measurements to objects, intensity data, e.g. reflectivity or intensity of a returned laser pulse, and/or point cloud data, e.g. three-dimensional coordinates (X, Y, Z) of points in the environment, where each point of the point cloud can reflect intensity, etc. Furthermore, a radar can typically provide tracking data in the form of range data, e.g. distance to objects, velocity, e.g. radial velocity of objects (Doppler shift), which can be used to determine the speed and direction of moving objects, and/or reflectivity data, e.g. strength of the returned radar signal, which can be used to infer some properties, such as absorption, or the like, of the detected objects. A group of data points can be a plurality of pixels, a plurality of data points of a point cloud, or the like.

In some examples, the capturing subsystem 110 can include one or more further tracking assemblies (not shown) and/or one or more further video cameras (not shown).

Additionally, the capturing system 110 may comprise a transmitter 117, such as a radio frequency transmitting device, an RF-transmitter, an RF-transceiver, or the like. The transmitter 117 may be configured for wireless communication, i.e. radio frequency communication, with the rendering subsystem 120, viz. the transmitter 117 may comprise a wireless transmitter configured for wireless transfer of data to a wireless receiver. Sometimes, the transmitter can, also or alternatively, provide a wired connection with the rendering subsystem 120. The wired connection using any suitable communication protocol and/or physical format, such as ethernet, fiber connection, TCP/IP, etc. Further examples of the connection are found in section "data connections".

The rendering subsystem 120 may comprise a receiver 127, such as a radio frequency receiving device, an RF-receiver, an RF-transceiver, or the like. The receiver 127 may be configured for wireless communication, i.e. radio frequency communication, with the capturing subsystem 110, viz. the receiver 127 may comprise a wireless receiver configured for wireless reception of data from a wireless transmitter, an RF-receiver or a fiber-optic receiver. The receiver 127, similarly to the transmitter 117, can also or alternatively provide a wired connection with the rendering subsystem 120. The wired connection using any suitable communication protocol and/or physical format, such as ethernet, fiber connection, TCP/IP, etc.

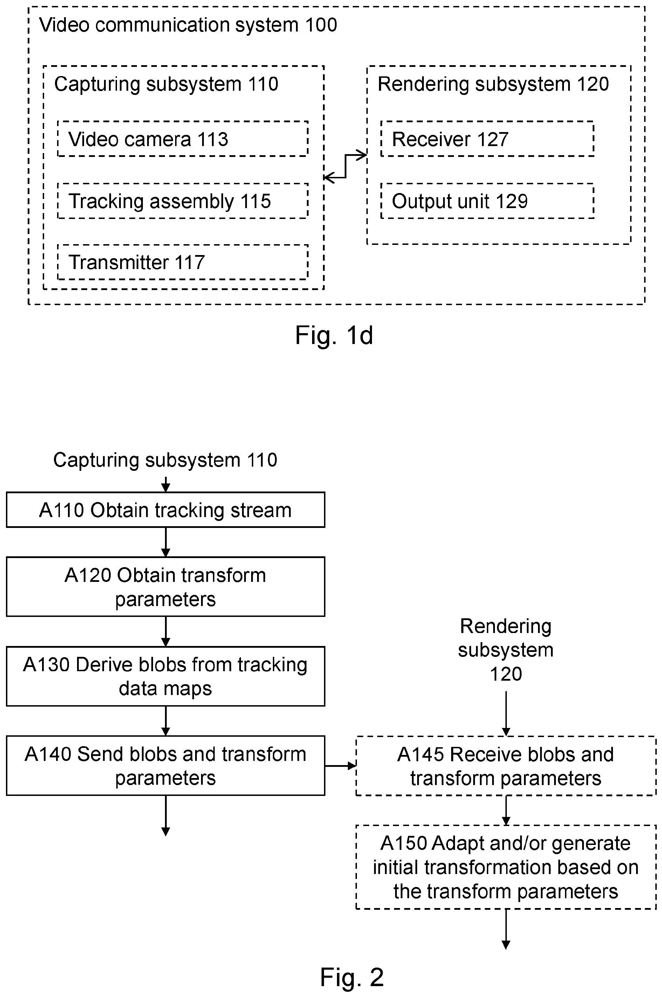

The rendering subsystem 120 may further comprise, as shown in Figure 1d, an output unit 129, such as a sending unit, a storage unit, a connection interface for broadcasting of a video stream, a display device, a screen, or the like. The output unit 129 can be configured to output the video stream, e.g. including a rendered trace.

The tracking assembly 115 can be fixedly mounted at the video camera 113. However, sometimes, the tracking assembly 115 and the video camera 113 can be separated, e.g. each held by a respective tripod, or the like. In various more detailed examples, the tracking assembly 115, aka tracking camera, can thus be mounted on top of the video camera 113, aka broadcast camera. In many examples, referred to as "fixed relationship", it is assumed that the tracking assembly is fixed in relation to the video camera 113, or vice versa. This means for example that a spatial relationship between the tracking assembly 115 and the video camera 113 is constant, fixed, the same or not changing. Thus, when the video camera and the tracking assembly 115 are the fixed relationship, the terms "the video spatial parameter" and "the tracking spatial parameter" can be used interchangeably, since in the examples with fixed relationship a spatial change of one of the video camera 113 and the tracking assembly 115 necessarily implies a spatial change of the other one of the video camera 113 and the tracking assembly 115.

Furthermore, a tracking data map stream is sent from the tracking assembly 115 to the tracking managing subsystem 111, such as a single board computer, of the capturing subsystem 110.

The tracking managing subsystem 111 can be included in a camera housing of the video camera 113, in a casing of the tracking assembly 115, or it can be realized as an entity separated from the video camera 113 and/or the tracking assembly 115.

In Figure 1a, the tracking managing subsystem 111 is illustrated as a separate entity. In Figure 1b, the tracking managing subsystem 111 comprises the tracking assembly 115, e.g. the tracking managing subsystem 111 and the tracking assembly 115 can form a single entity, enclosed by a common casing, i.e. common to the tracking managing subsystem 111 and the tracking assembly 115. In Figure 1b and Figure 1c, the tracking managing subsystem 111 can be communicatively connected to the rendering subsystem 120, e.g. via the transmitter 117 or directly, to the rendering subsystem 120, e.g. the receiver 127 of the rendering subsystem 120, or the like. Further descriptions of the connections shown in Figure 1a through Figure 1c is found below in section "data connections".

Figure 1d is a block diagram of the exemplifying video management systems 100 of Figure 1a through Figure 1c. As mentioned, the capturing subsystem 110 may comprise the video camera 113, the tracking assembly 115 and the transmitter 117 and the rendering subsystem 120 may comprises the receiver 127 and the output unit 129.

As used herein, a blob can refer to a bundle of tracking data that have been identified as being a moving bundle of tracking data from one tracking data map, e.g. of a first timestamp, to another tracking data map, e.g. of a second timestamp. The bundle of tracking data is thus a sub-set of data points identified in the first and second tracking data maps. The first and second timestamps are typically subsequent in a time series of tracking data maps of the tracking stream. The tracking data can be obtained, such as received, fetched, or the like, from a tracking assembly, such as a radar, a lidar, a camera, a video camera, a high-speed still image camera, or the like. As an example, a blob comprises a set of pixels, i.e. one or more pixels, that have been identified as being a moving collection of pixels from one frame to another subsequent frame, e.g. by use of a blob detection procedure. In related literature, e.g. Computer Vision (CV), many known blob detection procedures are described. For example, differential blob detection, spatial blob detection, grey-level blob detection or the like. For the purpose of at least some embodiments herein, any known blob detection procedure that is appropriate for supporting tracking of moving objects may be applied to the tracking image frame of the tracking stream. Other suitable blob detection procedures may also be used. As another example, the blob can comprise a radar and/or lidar data set that has been identified as being a moving data set from one tracking data map to another tracking data map. In some examples, the blob can comprise a set of radar and/or lidar measurements, e.g. movement measurements or the like.

As used herein, a timestamp can relate to a point in time, a moment in time, a period in time, an interval of an elapsed time, a duration of time, and the like. For example, the timestamp can a single point in time and/or to a time span, extending from a first point in time to a second point in time, e.g. a particular timeslot.

As used herein, a trace comprises a series of blobs detected in a sequence of tracking data maps, where the series of blobs is determined to pertain to the same moving object, such as sports projectile or the like. A known or proprietary tracing procedure may be used for this purpose. Again, in related literature many known tracing procedures are described. Blob detection and/or tracking procedure are known from e.g. US11335013, US 10338209 and other documents.

As used herein, the terms "golf ball", "tracked object", "sports projectile" or the like, may have been used interchangeably. A tracked object may thus be a sports projectile, a golf ball, a ball, a tennis ball, a boule ball, a baseball, a basketball, a football, a soccer ball, a badminton ball, a table tennis ball, a curling stone or the like.

As used herein, the term "exposure parameter", "exposure setting", or "exposure" for short, can refer to any one of aperture, shutter speed, ISO sensitivity, exposure compensation, white balance, or the like, or a combination thereof.

The term "transformation parameters" refers to parameters relating to adaption of a current transformation, i.e. parameters to be used when adjusting/updating the transformation, e.g. due to detected changes in translation and/or orientation of the video camera 113 and/or the tracking assembly 115.

The term "spatial parameter" can refer to one or more translational coordinates, one or more orientational coordinates, a respective delta, i.e. a difference, offset, or the like, for one or more translational and/or orientational coordinates, e.g. in three dimensions for translations, in three dimensions for orientations.

Translation coordinates can be obtained from GPS-position of the camera 113 and/or the tracking assembly 115, or even from analysis of data therefrom as described herein.

Orientational coordinates can be obtained from a compass, a GPS of the camera 113 and/or the tracking assembly 115, or even from analysis of data therefrom as described herein.

In some examples, a calibration may have been performed in order to generate, such as create, calculate, or the like, an initial transformation between a tracking coordinate system C1 of the tracking assembly 115 and a video coordinate system C2 of the video camera 113. To obtain the initial transformation between a tracking camera and a video camera, several methods can be employed. One approach to achieve calibration, is to use known patterns, such as a checkerboard, or the like, placed within the overlapping field of view of both cameras, i.e. the video camera 113 and the tracking assembly 115. Images of the pattern are captured by each camera/detector/tracker, and corresponding feature points are detected. A transformation matrix is then computed by correlating these points. Another method involves Simultaneous Localization and Mapping (SLAM), where a SLAM algorithm is used with the tracking camera to create a map and estimate its position. Corresponding features in the video camera's view are identified, and the transformation matrix is calculated to align their coordinate systems. Furthermore, marker-based tracking can be used, where visible markers, such as tee markers, special observable signs, or the like, are placed within a shared field of view visible in both cameras. This can be considered to be similar to pattern-based, but with marker-based no intentional and/or known patterns are required. The visible markers are detected and tracked using computer vision algorithms, and the transformation matrix is calculated based on their relative positions. Each of these methods allows for the alignment of the tracking camera's coordinate system C1 with that of the video camera, thereby providing the initial transformation between the tracking coordinate system C1 and the video coordinate system C2. It may here be noted that e.g. image frames captured by the video camera 113 are associated with a frame coordinate system, which is related to the video coordinate system C2 and dependent on a focal length, e.g. a current or fixed focal length, of the video camera 113. Furthermore and similarly, e.g. tracking data maps captured by the tracking assembly 115 are associated with a tracking data map coordinate system, such as a pixel coordinate system, or the like. The tracking data map coordinate system is related to the tracking coordinate system C1 and dependent on a focal length, e.g. a current or fixed focal length of the tracking assembly 115 and/or similar property relevant in case the tracking assembly 115 includes, such as uses, employs, or the like, radar technology. Conversion and/or transformation between e.g. the video coordinate system C2 and the frame coordinate system, the tracking coordinate system and the tracking data map coordinate system, or the like, is well known in the art. Hence, an initial tracking-to-image transformation can be obtained to be used when transforming from the tracking coordinate system to the frame coordinate system. The initial tracking-to-image transformation can be generated by the capturing subsystem 110, the rendering subsystem 120, or the like. In some examples, the capturing subsystem 110 can provide, such as sends or the like, the initial tracking-to-image transformation to the rendering subsystem 120, e.g. via a wired or wireless connection.

Figure 2 shows examples of the methods herein. For example, the tracking managing subsystem 111 performs a method for providing blobs relating to tracking of a sports projectile. The tracking managing subsystem 111 is communicatively connected to the tracking assembly 115. In this manner, it is made possible to adjust a transformation, such as the initial transformation, between the video camera 113 and the tracking assembly 115. In particular, a set of transformation parameters can be sent from the capturing subsystem 110 to the rendering subsystem 120, which can use these parameters to provide, such as adjust, calibrate, recalibrate, generate, create, and/or the like, the transformation, e.g. from one frame to another frame in the tracking stream in view of changing conditions reflected by the set of transform parameters. Therefore, in some scenarios as mentioned above, the initial transformation may be determined before some examples of the method is performed. In these scenarios, some examples of the method thus provide for a way to adjust and/or adapt the initial transformation according to changed conditions, reflected by the set of transform parameters, or at least some of them. In other scenarios the initial transformation is generated, while making use of the set of transform parameters as described herein. In these scenarios, some examples of the method thus provide for a way to create and/or generate the initial transformation, e.g. while taking advantage of one or more of the transform parameters of the set of transform parameters.

One or more of the following actions may be performed in any suitable order, e.g. according to the transform aspect.

### Action A110

The tracking managing subsystem 111 obtains, such as receives, fetches, captures, or the like, a tracking stream from the tracking assembly 115. The tracking stream includes tracking data maps, which are associated with timestamps. Each tracking data map of the tracking data maps is associated with a respective timestamp of the timestamps. The timestamps can be included in the tracking stream, and/or the timestamps can be derived from a start time and knowledge about a frequency at which the tracking data maps are captured, e.g. by the tracking assembly 115. A tracking data map can be a set of pixels of an image frame, data of a point cloud for radar information, etc.

### Action A120

The tracking managing subsystem 111 obtains, such as receives, fetches, calculates, determines, or the like, a set of transform parameters. The set of transform parameters includes one of:
- a tracking spatial parameter relating to translation and/or orientation of the tracking assembly 115, wherein the tracking spatial parameter is associated with one or more of the timestamps, referred to as "a first set of timestamps",
- a tracking focus parameter relating to focal length of the tracking assembly 115, wherein the tracking focus parameter is associated with one or more of the timestamps, referred to as "a second set of timestamps",
- a lens model parameter relating to a model of a lens of the video camera 113,
- a tracking sensor size parameter relating to a size of a detection sensor of the tracking assembly 115,
- a resolution parameter relating to a resolution of a detection sensor of the tracking assembly 115,
- a video spatial parameter relating to translation and/or orientation of a video camera 113, wherein the tracking managing subsystem 111 is communicatively connected to the video camera 113, wherein the video spatial parameter is associated with one or more of the timestamps, referred to as "a third set of timestamps",
- a video focus parameter relating to focal length of a video camera 113, wherein the tracking managing subsystem 111 is communicatively connected to the video camera 113, wherein the video focus parameter is associated with one or more of the timestamps, referred to as "a fourth set of timestamps",
- a video sensor size parameter relating to a size of an image sensor of the video camera 113, or
- a combination of two or more thereof.

In some examples, each transform parameter of the set of transform parameters can be associated with one or more of the timestamps. However, e.g. the lens model parameter, the tracking sensor size parameter, the resolution parameter of the detection sensor are typically static over time and therefore association with timestamps can be superfluous. Sometimes, one or more of the transform parameters can be associated with the same one or more timestamps and sometimes with one or more timestamps that are different from each other. As an example, the first, second, third and fourth sets of timestamps can be the same set of timestamps. In some examples, two or more of the first, second, third, and fourth sets of timestamps can refer to a respective set of timestamps that is different from the other sets of timestamps.

As an example, the video spatial parameter, the video focus parameter and/or the video sensor size parameter can be received from the video camera 113, e.g. via a wired or wireless connection, e.g. from a memory thereof.

As an example, one or more of the tracking spatial parameter, the tracking focus parameter, the tracking sensor size parameter, the resolution parameter, etc. can be received from the tracking assembly 115, e.g. via a wired or wireless connection.

In some examples, the tracking managing subsystem 11 can comprise, such as include, incorporate, be integrated with, or the like, the tracking assembly 115. Then, one or more of the tracking spatial parameter, the tracking focus parameter, the tracking sensor size parameter, the resolution parameter, etc. can be communicated internally within the tracking managing subsystem 111, e.g. between different hardware and/or software units of the tracking managing subsystem 111.

As an example, the lens model parameter can be received from the video camera 113, e.g. via a wired or wireless connection 909. The lens model parameter can provide information about the video camera's 113 resolution, pixel size, aspect ratio, and/or the like. The lens model parameter can thus be stored in a memory of the video camera 113.

In some examples, the tracking managing subsystem 111 can obtain one or more of the transform parameters of the set of transform parameters from an internal or external memory. Depending on the obtained transform parameter the memory can be associated with, e.g. included in, external to, connected to, and/or the like, the tracking managing subsystem 111, the tracking assembly 115, the video camera 113, or the like.

In some examples, the tracking managing subsystem 111 can obtain one or more of the transform parameters of the set of transform parameters from a translation and/or orientation measurement device, such as an IMU, or the like.

In some examples, the tracking managing subsystem 111 can obtain one or more of the transform parameters of the set of transform parameters from analysis of the tracking data stream. The analysis can include image and/or signal processing, e.g. of two or more consecutive tracking data maps of the tracking data stream, to determine e.g. the tracking spatial parameter(s). Further description of this follows below, e.g. in connection with action A130.

### Action A130

The tracking managing subsystem 111 derives a set of blobs by applying a blob detection procedure to at least two tracking data maps of the tracking stream.

In some examples, the tracking managing subsystem 111 can derive the set of blobs based on one of:
- the tracking spatial parameter and the one or more timestamps associated therewith, when the set of transform parameters includes the tracking spatial parameter,
- the tracking focus parameter and the one or more timestamps associated therewith, when the set of transform parameters includes the tracking focus parameter,
- a combination thereof.

In this manner, the tracking managing subsystem 111 can perform the deriving of the set of blobs, while taking one or more of the abovementioned transform parameters into account.

In some examples, this means that, e.g. before a blob detection procedure is applied, the tracking managing subsystem 111 can determine, e.g. by signal and/or image analysis of said at least two tracking data maps, e.g. the tracking spatial parameter. By means of the tracking spatial parameter, said at least two tracking data maps can be aligned, e.g. into one and the same coordinate system, e.g. the coordinate system of the former or latter tracking data map, preferably the coordinate system of latter tracking data map. Then, the tracking managing subsystem 111 can apply the blob detection procedure to identify any blobs, e.g. any existing one or more blobs.

All or some of the detected blobs can be included in a set of blobs to be sent in action A140 below. In some examples, if desired, the tracking managing subsystem 111 can execute a tracking procedure to evaluate the detected blob and e.g. then only include those blobs that appear to belong to a trace into the set of blobs to be sent in action A140. The set of blobs sent to the rendering subsystem 120 can thus typically be associated with a timestamp, i.e. all blobs of the set of blobs are associated with the same timestamp, e.g. a current timestamp. Explicitly, the set of blobs does not form a trace of a sports projectile. The set of blobs are used by the rendering subsystem 120, which creates one or more traces from multiple received set of blob, where each set of received blobs belong to a respective timestamp. Therefore, in some examples, a tracking procedure is performed not only by the rendering subsystem 120, but optionally also by the capturing subsystem 110. It may be preferred that a capturing tracking procedure, applied by the capturing subsystem 110, is the same or at least similar to a rendering tracking procedure, applied by the rendering subsystem 120. For example, the capturing tracking procedure can be a simplified, e.g. in terms of memory requirements and/or processor capacity requirements, version of the rending tracking procedure. The capturing tracking procedure can be fast, e.g. faster than the rendering tracking procedure. As an examples, the capturing tracking procedure implements a subset of features implemented by the rendering tracking procedure. Notably, the terms "capturing" and "rendering" are merely used to label the tracking procedures implemented in the capturing subsystem and the rendering subsystem, respectively.

As an example, the tracking managing subsystem 111 can receive a first tracking data map associated with a first timestamp and a second tracking data map associated with a second timestamp. The second timestamp is subsequent in time to the first timestamp. The first and second tracking data maps, i.e. without modification, can be input to the blob detection procedure, provided that the tracking assembly 115 has the same spatial position, i.e. translational and/or orientational position, at the first and second timestamps. When e.g. a particular tracking spatial parameter has been obtained and is associated with a particular timestamp, such as the first timestamp, before the second timestamp, e.g. closest before the second timestamp. This means that the spatial position of the tracking assembly 115 may be different at the first timestamp compared to the second timestamp. This difference can be indicated by the particular spatial parameter, e.g. when the particular spatial parameter is non-zero. Let's assume that the particular spatial parameter indicates a certain translational movement along one of the coordinate axis of the tracking coordinate system C1. Such translational movement can be determined, e.g. by the tracking managing subsystem 111, by analyzing two subsequent tracking data maps, such as the first tracking data map and the second tracking data map. A blob can be identified as that a group of data points has moved from one position in the first tracking data map to another position in the second tracking data map. However, in this example, the movement of the tracking assembly implies that the actual movement of the identified group of data points needs to be adjusted according to the particular tracking spatial parameter, e.g. the certain translational movement, in order to correctly determine the movement of the blob.

Examples of algorithms for detecting the motion of the video camera 113 and/or the tracking assembly 115 include, but are not limited to, e.g.: optical flow, feature matching, visual-inertial odometry (VIO), egomotion estimation, and the like. These algorithms are briefly described in section defining the terms and expressions further below.

Explicitly, the particular spatial parameter in the example above can thus be obtained by any one or more of the aforementioned algorithms and/or similar algorithms.

In the example above, a translational movement along one coordinate axis is described. The skilled person can without undue burden extend this example to translational and/or orientational movements along one or more coordinate axes of the tracking coordinate system C1.

Furthermore, in some examples and in the same or similar manner as above, the blob detection procedure can be adjusted in order to compensate for different focus and/or zoom level applied when capturing, e.g. by the tracking assembly 115, the first and second tracking data maps. Such different focus and/or zoom level can be derived from the tracking focus parameter and optionally the associated one or more timestamps. For example, due to different focus at the first and second data maps, it may erroneously appear as that a group of data points have moved, but instead a change of the focus caused the apparent movement. Then, the tracking data maps can be adjusted based on the tracking focus parameter to detect true movements of a group of data point.

As an example, as a zoom level changes, a movement from frame to frame in the video stream is introduced. The movement may cause the appearance of data point movement. The zoom level also changes the scene itself, making new datapoints appear and others disappear, as the objects enter or leave the scene, or field of view of the video camera 113.

Moreover, as the scene, or field of view, in the tracking stream changes, due to zoom changes, it is beneficial to keep track of the relative changes in zoom to instruct the tracking procedure where to look for subsequent occurrences of an object being tracked. That way, a small object, such as a golf ball, may be identifiable by the tracking procedure over a longer distance, in higher fidelity, and/or during a longer time period, and/or the like, than with fixed zoom on the tracking assembly 115.

Moreover, in some examples, the exposure parameter may need to be used when adapting the blob detection procedure for different circumstances applicable at the first and second tracking data maps. When detecting blobs in an image, it is preferred that the exposure level is set to in a suitable manner. For example, with too low exposure, data points, or blobs, may disappear due to that the scene, or captured frames, is too dark ("under exposure"). Oppositely, with too high exposure data points can disappear as the scene is too bright ("over exposure"). Furthermore, exposure correlates to contrast in the scene, and contrast may be a necessity for data points observability, i.e. in order to for the blob detection procedure to be able to identify blobs.

In view of the above, it may be noted that in some examples, the blob detection procedure per se can be known. Furthermore, in some cases, it can be that the coordinate system of the tracking data maps need not be adjusted due to that the received transform parameters does not imply any change in translation and/or orientation and/or zoom/focus of the tracking managing subsystem 111, and/or any change in translation and/or orientation of the video camera 113 (while assuming fixed spatial relation between the video camera 113 and the tracking assembly 115 and zoom/focus of video camera 113 does of course not affect the blob detection procedure). In those cases, the blob detection need not take the transform parameters into account. However, when one or more of the transform parameters indicate that there is a change, the tracking data maps can be adapted by transformation into a suitable coordinate system.

### Action A140

The tracking managing subsystem 111 sends the set of blobs and the set of transform parameters, e.g. to a rendering subsystem 120.

In this manner, e.g. a generation, performed by the rendering subsystem 120, of the initial transformation between the tracking coordinate system C1 and the video coordinate system C2 based on the set of transform parameters can be enhanced, such as adjusted, compensated, or the like. For example, the calibration can rely on one or more of the transform parameters, instead of estimates, when generating the initial transformation.

Additionally or alternatively, in this manner, e.g. an adaption, performed by the rendering subsystem 120, of the initial transformation between the video coordinate system C2 and the tracking coordinate system C1 based on the set of transform parameters is enabled. Expressed differently, the initial transformation can be dynamically adjusted from one timestamp to another timestamp to ensure that a trace, derived from the set of blobs, is accurately rendered in a video stream, captured by the video camera 113. This can apply at least when the set of transform parameters includes one or more of the tracking spatial parameter, the tracking focus parameter, the video spatial parameter, the video focus parameter, or a combination thereof.

According to examples in which the initial transformation is adapted, the initial transformation may have been obtained by calibration and is valid in connection with, e.g. during, a timestamp that precedes, for example directly precedes, said one or more timestamps associated with the transform parameter(s) used when adapting the initial transformation, e.g. to obtain an updated, or current, transformation.

### Action A145

Subsequently, the rendering subsystem 120 can receive the set of blobs and the set of transform parameters. In some examples, the rendering subsystem 120 can also receive the video stream, captured by the capturing subsystem 110, such as the video camera 113, or the like.

Examples relating to communication means, communication channels, and/or the like for action A140 and A145 will be described in section "data connections" below.

### Action A150

According to at least some examples, the method can be performed by the video communication system 100. As mentioned, the video communication system 100 can comprise the tracking managing subsystem 111 and the rendering subsystem 120. The video communication system 100 can further comprise the video camera 113, when the set of transform parameters comprises the video spatial parameter and/or the video focus parameter.

As mentioned, e.g. the initial transformation, or the like, can be defined for transformation between the tracking coordinate system C1 of the tracking assembly 115 and the video coordinate system C2 of the video camera 113. Then, the video communication system 100 may adapt, e.g. by the rendering subsystem 120, the initial transformation based on one or more transform parameters of the set of transform parameters to obtain an adapted transformation e.g. applicable in connection with said one or more timestamps.

In some examples, thanks to the adapted transformation, the rendering subsystem 120 can render a trace of the sports projectile, e.g. despite of that e.g. translational and/or orientational spatial movements of the tracking assembly and the video camera dynamically, e.g. from frame to frame, occurs and/or that focus and/or zoom of the tracking assembly 115 and/or the video camera 113 dynamically, again from frame to frame, changes. Notably, sometimes "from frame to frame" can refer to "from tracking data map to tracking data map", i.e. in case the tracking stream is considered. The expression "from frame to frame" can be from a first frame and a second frame, where the second frame is later in time than the first frame. There can be one or more further frames between the first and second frame, but not necessarily. The first frame typically refers to a frame for which the transformation applies, which can be an initial transformation or an updated transformation as is described further herein.

As an example, e.g. while assuming the tracking assembly to be fixed in relation to the video camera, the video spatial parameter can indicate that the video camera 113 has moved translationally a particular distance along one of the coordinate axis of the video coordinate system C2, e.g. when comparing two different frames. Due their fixed relation, this can also apply to the tracking assembly 115. If a trace, to be rendered, is not rendered while taking the translational movement into account into account, the resulting trace can be degenerated, such as misplaced in the frame, rendering a faulty and/or misleading trace, or the like. Therefore, when rendering the trace in the video frames captures by the video camera 113, the translational movement is compensated for, whereby an adjusted trace of the sport projectiles path is achieved and preferably rendered. Notably, not only the position of the last blob needs to be adjusted, but all parts of the trace that is within the current frame. The skilled person can without undue burden extend this example to translational and/or orientational movements along one or more coordinate axes of the tracking coordinate system C1.

In more detail, according to some examples, the rendering subsystem 120 can use one or more of the transform parameters in order maintain, e.g. for each frame, an adjustment vector in relation to a latest transformation, such as the initial tracking-to-image transformation. Thus, in some examples, the rendering subsystem 120 can obtain the set of blobs and the set of transformation parameters, e.g. in action A145 which precedes action A150. Firstly, the rendering subsystem can perform a tracking procedure, while taking one or more of the transform parameters into account. Typically, the tracking procedure has identified one or more traces and attempt to match one or more blobs of the set of blobs with one or more of those identified traces. The transform parameter can thus be used to adjust those identified traces before, the blobs of the set of blobs are matches against those identified traces. Thus, compensating for translation and/or orientation movements of the video camera 113 and/or the tracking assembly 115. When a trace to be rendered has been thus obtained, the rendering subsystem 120 can proceed with rendering of that trace in the video stream. Since the trace was already adjusted in order to perform the tracking, the rendering subsystem 120 can transform the trace directly according to the current transformation, such as the initial tracking-to-image transformation. Then, the transformed trace is rendered, by the rendering subsystem 120, in the video.

Furthermore, in some examples and in the same or similar manner as above, the rendering of the trace can be adjusted in order to compensate for different focus and/or zoom level applied when capturing, e.g. by the video camera 113, video frames for which the rendering subsystem 120 may have received a particular video focus parameter that indicates that focus and/or zoom has changed since the initial transformation was created. For example, as the zoom changes the scene, it also changes the position of objects within an image frame. By keeping track of changes in focus and zoom, the rendering of the trace can be adjusted so that each data point along the trace is placed in the correct position given the adjustment of the scene.

In some examples, the tracking spatial parameter can indicate that the tracking assembly 115 has moved translationally a particular distance along one of the coordinate axes of the tracking coordinate system C1. If a trace, to be rendered, is not rendered while taking the translational movement into account into account, the resulting trace can be degenerated, such as misplaced in the frame, rendering a faulty and/or misleading trace, or the like. Therefore, when rendering the trace in the video frames captures by the video camera 113, the translational movement is compensated for, whereby a smooth realistic trace of the sport projectiles path is achieved. The skilled person can without undue burden extend this example to translational and/or orientational movements along one or more coordinate axes of the tracking coordinate system C1.

Furthermore, in some examples and in the same or similar manner as above, the rendering of the trace can be adjusted in order to compensate for different focus and/or zoom level applied when capturing, e.g. by the video camera 113, tracking data maps with which the rendering subsystem 120 can render a trace in the video frames. The rendering subsystem 120 may have received a particular tracking focus parameter that indicates that focus and/or zoom has changed since the initial transformation was created. It can be noted that zooming with the tracking assembly 115 would not affect the rendering subsystem 120, but rather the tracking subsystem 110, as in the example in relation to action A130 above.

In some examples, which may be combined with one or more of the examples relating to Figure 2, the following procedure can be performed. In the following, system refers to the capturing subsystem and/or the tracking managing subsystem and/or the rendering subsystem.
- Establish initial calibration and starting values for the transform parameter(s).

At the outset of the system's operation, baseline values for the transform parameters can be defined. This step can involve performing an initial calibration process, where measurements are taken to set reference points or benchmarks for each transform parameter. These base line values, or initial values, can act as a foundation for future comparisons. For example, one or more of the tracking spatial parameter, the tracking focus parameter, the video spatial parameter, the video focus parameter, can be calibrated to ensure the system begins with accurate and consistent settings. In this manner, changes and/or offsets from these values can be monitored, as described in the next paragraph. The purpose is to ensure that all components operate within expected norms from the beginning.
- Measure changes of the transform parameter(s) in view of the calibrations performed above, and create vectors that describe the "offset" from the base line values, or initial values, obtained above.

After the initial calibration, the system continuously or periodically monitors changes or deviations from the calibrated values, aka base line values, initial values or the like. These changes, or "offsets," represent the difference between the current value of the parameter and its initial, calibrated value. By measuring these variations over time, the system can create offset vectors-mathematical representations of these deviations. These vectors describe the magnitude and direction of the drift or changes in the transform parameter(s), which might be caused by environmental factors, wear and tear on components, and/or operation(s) of the video camera and/or the tracking assembly. The operation can be zoom/focus changes, rotation and/or position changes of the tracking assembly and/or the video camera.

As an example, for translational parameters of the tracking and/or video spatial parameter(s), the change vector can mathematically describe the change from one frame to another, or in fact e.g. the change between frame 0 and frame n when comparing to the initial transformation or latest update of a baseline transformation/calibration. This vector can be multiplied with the initial calibration value (integer, two/three/n-dimensional vector and/or n-dimensional matrix, etc) to "apply" the change, i.e. update the baseline transformation. In this manner, an updated transformation and/or an updated calibration can be achieved.
- At a given time, automatically or manually modify the initial calibration using the "offset vectors". In this manner, the initial calibration, or the initial transformation, is kept up to date.

Regularly or irregularly, the system can update the original calibration values. This can happen either automatically through pre-set conditions or manually when triggered by an operator. As an example of pre-set condition, it can be the offset is greater than predetermined threshold value(s) for one or more of the transform parameters. The offset vectors, which represent how much each parameter has shifted, are used to adjust the original calibration values to account for these changes. This ensures that the system remains accurate and aligned with real-world conditions over time. Essentially, the system recalibrates itself using the offset data to maintain performance.
- Return to measure changes.

Once the calibration adjustments have been made, the system goes back to continuously monitoring for further changes. This creates a feedback loop where the system is in a constant state of observation and adjustment, ensuring ongoing accuracy. It repeats this process to adapt to new conditions and to counteract any drift in the system's performance or environmental changes. This cyclical process allows for the maintenance of precision and stability throughout the system's operation.

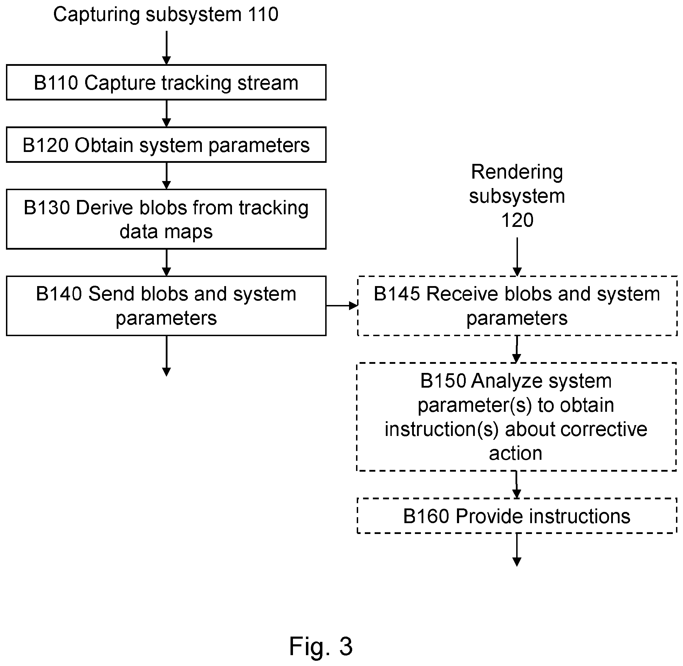

Figure 3 shows examples of the methods according to the system aspect. For example, the tracking managing subsystem 111 performs a method for providing blobs relating to tracking of a sports projectile. The tracking managing subsystem 111 is communicatively connected to the tracking assembly 115. In this manner, it is made possible to monitor and/or control operation of the tracking assembly 111 and/or the video camera 113. In particular, a set of system parameters can be sent from the capturing subsystem 110 to the rendering subsystem 120, which can use these parameters to monitor and/or control the operation.

One or more of the following actions may be performed in any suitable order, e.g. according to the system aspect.

### Action B110

The tracking managing subsystem 111 obtains, such as receives, fetches, captures, or the like, a tracking stream from the tracking assembly 115. Reference is made to action A110 as applicable.

### Action B120

The tracking managing subsystem 111 obtains, such as receives, fetches, calculates, determines, or the like, the set of system parameters. The set of system parameters includes one of:
- a tracking managing subsystem processor-usage parameter relating to usage of one or more processors of the tracking managing subsystem (111),
- a tracking managing subsystem temperature parameter relating to a temperature of the tracking managing subsystem (111),
- a first power parameter relating power consumed by the tracking managing subsystem (111),
- a first voltage parameter relating to voltage over the tracking managing subsystem (111),
- an error parameter indicating error messages from the tracking assembly (115) (black frame, dropping frames, irregular frame rate, communication problems between tracking assembly (115) and the tracking managing subsystem (111), etc.,
- a running processes parameter relating to number of running processes on the tracking managing subsystem (111),
- a framerate parameter relating to framerate of the tracking assembly (115), e.g. camera framerate,
- an exposure parameter relating at least one exposure setting of the tracking assembly (115),
- a port parameter relating to port connection information of the tracking managing subsystem (111), e.g. which physical connector ports are occupied, and which physical connector ports are available,
- a radar frequency parameter relating to a radar frequency of the tracking assembly (115),
- a continuous wave (CW) parameter relating to radar CW disturbance of the tracking assembly (115),
- a tracking assembly processor-usage parameter relating usage of one or more processors of the tracking assembly (115),
- a tracking assembly temperature parameter relating a temperature of the tracking assembly (115),
- a second power parameter relating power consumed by the tracking assembly (115),
- a second voltage parameter relating to voltage over the tracking assembly (115), or
- a combination of two or more thereof.

In some examples, each system parameter of the set of system parameters can be associated with one or more of the timestamps. Sometimes, one or more of the system parameters can be associated with the same one or more timestamps and sometimes with one or more timestamps that are different from each other.

The tracking managing subsystem processor-usage parameter relates to the utilization of one or more processors within the tracking managing subsystem 111. It tracks the percentage of CPU usage, giving insights into how much processing power is being consumed, and helps in identifying whether the system is operating efficiently or experiencing overloads.

The tracking managing subsystem temperature parameter monitors the temperature at or inside the tracking managing subsystem 111. This parameter collects real-time temperature data, usually measured in Celsius, Fahrenheit, or Kelvin, ensuring the subsystem stays within safe operational limits to prevent overheating.

The first power parameter relates to the power consumed by the tracking managing subsystem 111. It measures energy consumption in watts, providing a clear picture of how much power the system is using and allowing for optimization or troubleshooting of power-related issues.

The first voltage parameter monitors the voltage supplied to the tracking managing subsystem 111. By tracking voltage levels, it ensures the subsystem receives the correct voltage, which is essential for maintaining stable and reliable system operation.

The error parameter indicates error messages coming from the tracking assembly 115. This parameter logs a range of issues such as black frames, dropped frames, irregular frame rates, or communication problems between the tracking assembly and the tracking managing subsystem, aiding in system diagnostics and performance improvement.

The running processes parameter relates to the number of active processes on the tracking managing subsystem 111. It monitors how many processes are running simultaneously, helping to identify whether the system is overloaded or running efficiently.

The framerate parameter relates to the framerate of the tracking assembly 115, for example, the camera framerate, a capturing frame rate, or the like. Expressed differently, the framerate parameter indicates a frequency at which tracking data maps are captured by the tracking assembly 115. This parameter can also measure how many frames per second are being processed, e.g. by the tracking managing subsystem 111, ensuring that a real-time frame rate suitable for accurate tracking is maintained.

The exposure parameter relates to at least one exposure setting of the tracking assembly 115. Exposure settings control the amount of light captured by the system's sensors, affecting image quality and performance in varying lighting conditions.

The port parameter relates to port connection information of the tracking managing subsystem 111. It tracks which physical connector ports are currently occupied and which are available, aiding in port management and system configuration.

The radar frequency parameter relates to the radar frequency of the tracking assembly 115. This parameter ensures the system operates at the correct radar frequency, which is crucial for accurate tracking and detection in radar-based systems.

The continuous wave CW parameter relates to radar CW disturbances in the tracking assembly 115. It monitors any potential interference in the continuous wave radar signals, ensuring the system functions smoothly without signal degradation.

The tracking assembly processor-usage parameter relates to the usage of one or more processors within the tracking assembly 115. This parameter monitors processor load and utilization within the assembly, ensuring that the processors are not overloaded, and that the system can run efficiently.

The tracking assembly temperature parameter monitors the temperature inside or near the tracking assembly 115. It provides real-time temperature data to ensure that the assembly is running within safe thermal limits and prevents potential damage from overheating.

The second power parameter relates to the power consumed by the tracking assembly 115. By tracking energy consumption in watts, it helps monitor the efficiency and performance of the tracking assembly, ensuring that power usage stays within acceptable limits.

The second voltage parameter monitors the voltage supplied to the tracking assembly 115. This parameter ensures the tracking assembly operates within the correct voltage range, which is essential for maintaining stable system performance and preventing voltage-related issues.

In some examples, the tracking managing subsystem 111 can obtain one or more of the system parameters of the set of system parameters from an internal or external memory. Depending on the obtained system parameter the memory can be associated with, e.g. included in, external to, connected to, and/or the like, the tracking managing subsystem 111, the tracking assembly 115, the video camera 113, or the like.

### Action B130

The tracking managing subsystem 111 derives a set of blobs by applying a blob detection procedure to at least two tracking data maps of the tracking stream. Reference is made to action A130 for examples when the system aspect is combined with the transform aspect and general description of the blob detection procedure.

### Action B140

The tracking managing subsystem 111 sends the set of blobs and the set of system parameters, e.g. to a rendering subsystem 120.

In this manner, the rendering subsystem 120 can monitor and/or control the operation of the capturing subsystem 110, such as the tracking managing subsystem 111, the tracking assembly 115, or the like.

### Action B145

Subsequently, the rendering subsystem 120 can receive the set of blobs and the set of system parameters. In some examples, the rendering subsystem 120 can also receive the video stream, captured by the capturing subsystem 110, such as the video camera 113, or the like.

Again, examples relating to communication means, communication channels, and/or the like for action B140 and B145 will be described in section "data connections" below.

### Action B150

According to at least some examples, the method can be performed by the video communication system 100. As mentioned, the video communication system 100 can comprise the tracking managing subsystem 111 and the rendering subsystem 120.

The rendering subsystem 120 can analyze one or more system parameters of the set of system parameters to obtain, such as deduce, conclude, generate, or the like, one or more instructions concerning corrective actions, e.g. being reactive or proactive, to be performed, e.g. by the tracking managing subsystem 111, by an operator of the rendering subsystem 120, or the like.

In the following examples of how the rendering subsystem 120 can perform the analysis of one or more system parameters is provided.

By means of the tracking managing subsystem processor-usage parameter, the rendering subsystem 120 can deduce that the processor load is too high and then perform or suggest corrective actions, such as reducing the frame rate used by the tracking managing subsystem to prevent overloading and ensure smooth operation. If the processor load is too low, it may be feasible to increase the frame rate.

By means of the tracking managing subsystem temperature parameter, the rendering subsystem 120 can detect when the temperature of the tracking managing subsystem is approaching or exceeding a critical threshold indicating a temperature limit. If the temperature is too high, corrective actions can be taken, such as throttling the processing speed, reducing the frame rate, or activating additional cooling mechanisms to prevent overheating and potential hardware damage. If the temperature is within a safe range, the system may continue to operate at optimal performance levels. Processing speed can refer to an operating frequency of a processor of the tracking managing subsystem 111.

By means of the first and/or second power parameter, the rendering subsystem 120 can determine that the power consumption of tracking managing subsystem 111 and/or the tracking assembly is too high (e.g. above a threshold), potentially indicating inefficiencies or a malfunction. In response, the rendering subsystem can perform or suggest corrective actions such as reducing the workload, shutting down non-essential components, or switching to a power-saving mode to conserve energy. Conversely, if power consumption is low, it may suggest that the system can handle an increased workload without risking overconsumption. Furthermore, by monitoring the first/second power parameter, the rendering subsystem can also keep track of e.g. a battery level of the capturing subsystem and/or the tracking managing subsystem and/or the tracking assembly, i.e. when a respective battery thereof may need to be charged and/or recharged.

By means of the voltage parameter, the rendering subsystem 120 can detect that the voltage across the tracking assembly is outside an allowed voltage range, which could lead to performance issues or hardware damage. If the voltage is too high, the subsystem may suggest reducing the power input or redistributing the load to stabilize the voltage. If the voltage is too low, it might indicate a need for boosting power or addressing potential issues in a power supply for the tracking assembly. Furthermore, by monitoring the voltage parameter, the rendering subsystem can also keep track of e.g. a battery level of the capturing subsystem and/or the tracking managing subsystem, i.e. when a battery thereof may need to be charged and/or recharged.

By means of the error parameter, the rendering subsystem 120 can identify specific errors, such as black frames, dropped frames, or irregular frame rates, which might indicate communication problems between the tracking assembly and the field CPU. Upon detecting such errors, the subsystem can perform or suggest corrective actions like re-establishing the communication link, adjusting the frame rate, or troubleshooting the specific errors to ensure smooth operation.

By means of the running processes parameter, the rendering subsystem 120 can monitor the number of active processes on the tracking managing subsystem, such as those running on the field CPU. If the number of running processes is too high, leading to resource contention, the subsystem can suggest terminating non-essential processes, redistributing tasks, or allocating additional resources to maintain performance. If the process load is low, the subsystem may allocate additional tasks to optimize CPU utilization. Furthermore, the rendering subsystem 120 can, with the use of the running processes parameter, keep track of whether the expected processes are running or not. In more detail, the rendering subsystem 120 may have been provided with a list of processes that should preferably be running in the capturing subsystem 110, the tracking managing subsystem 111 and/or the tracking assembly 115, and/or the like.

By means of the framerate parameter, the rendering subsystem 120 can monitor the frame rate of the tracking assembly, such as the camera framerate. If the frame rate drops below a certain threshold, indicating potential performance issues, the subsystem can suggest reducing the load on other components, optimizing processing efficiency, or adjusting settings to maintain a consistent frame rate. Conversely, if the frame rate is stable and within the desired range, the subsystem may continue to operate normally or even increase the frame rate for improved tracking precision. As an example, a failure or mail function situation may start by that the frame rate parameter goes below a desired threshold for the frame rate, e.g. of the tracking assembly 115. Hence, this can be detected as a first sign of error and/or mal function by the rendering subsystem 120. Next, the rendering subsystem 120 can analyze one or more of e.g. the tracking managing subsystem processor-usage parameter, the tracking managing subsystem temperature parameter, the first/second power parameter, the voltage parameter, the tracking assembly processor-usage parameter, the tracking assembly temperature parameter to deduce said one or more instructions. For example, an excessive processor-usage can be the reason for a drop in the frame rate, then said more or more instructions can instruct how to reduce or redistribute tasks/processes assigned to the capturing subsystem 110.

By means of the exposure parameter, the rendering subsystem 120 can adjust the exposure settings of the tracking assembly in response to changing environmental conditions. If the exposure setting is too high, leading to overexposed images, the subsystem can suggest reducing exposure time or intensity. If the exposure is too low, resulting in underexposed images, the subsystem might recommend increasing exposure to ensure accurate and clear data capture.

By means of the port parameter, the rendering subsystem 120 can monitor which physical connector ports of the tracking managing subsystem are occupied and which are available. If critical ports are occupied or if there are connection issues, the subsystem can suggest redistributing connections, using alternative ports, or troubleshooting connection problems to ensure seamless communication and operation. E.g. thanks to the port parameter, the rendering subsystem 120 can confirm that connections at the ports are working as expected or if there is a faulty cable and/or connector somewhere.

By means of the radar frequency parameter, the rendering subsystem 120 can ensure that the radar frequency of the tracking assembly is operating within the designated range. If the frequency deviates from the optimal range, which could affect tracking accuracy or cause interference, the subsystem can suggest recalibrating the radar frequency or adjusting the operational environment to minimize interference and maintain tracking precision.

By means of the CW parameter, the rendering subsystem 120 can detect radar Continuous Wave disturbances within the tracking assembly. If CW disturbance levels are too high, leading to potential interference or inaccuracies in tracking, the subsystem can suggest adjusting the radar settings, changing the operational frequency, or modifying the environment to reduce CW interference and enhance tracking reliability.

By means of the tracking assembly processor-usage parameter, the rendering subsystem 120 can monitor the processor load within the tracking assembly. If the processor usage is too high, the subsystem can suggest reducing the workload by lowering the frame rate or redistributing tasks to prevent overloading and ensure smooth operation. If the processor usage is low, the subsystem may suggest increasing the frame rate or processing more data to fully utilize the available processing power.

By means of the tracking assembly temperature parameter, the rendering subsystem 120 can monitor the temperature of the tracking assembly. If the temperature exceeds safe operational limits, the subsystem can suggest reducing the workload, activating cooling systems, or taking other measures to prevent overheating and ensure the longevity of the tracking assembly. If the temperature is within a safe range, the subsystem can maintain or even increase processing activities without risk.

Thus, according to various examples above, said one or more instructions can instruct one or more of the capturing subsystem 110, the tracking managing subsystem 111, the tracking assembly 115, and the operator of the capturing subsystem 110 and/or the rendering subsystem 120 to increase/decrease the frame rate, activate/deactivate cooling mechanisms, throttle/boost processing speed, increase/decrease workload, turn on/shut down/restart essential and/or non-essential components, increase/decrease power input, increase/decrease voltage, replacing the power source, such as battery, of the capturing subsystem 110, checking cables and/or cable connections to and/or within the capturing subsystem 110, perform action in response to specific errors, start/shut-down non-essential processes, increase/decrease exposure, use alternative ports, remove/insert connections from various ports, recalibrate, adjust operation environment, adjust radar settings, change operational frequency, increase/decrease workload, turn on/shut down cooling, and/or the like, as applicable.

### Action B160

The rendering subsystem 120 can provide, such as send, output, display, or the like, said one or more instructions, e.g. to an operator of the video communication system (100), the capturing subsystem 110, the tracking managing subsystem 111, the tracking assembly 115, and/or the like. The one or more instructions can be provided to the operator by displaying the instructions on computer display of the rendering subsystem 120, by outputting as audio.

When the rendering subsystem 120 sends the instruction(s) to the capturing subsystem 110, the tracking managing subsystem 111, the tracking assembly 115, and/or the like any one or more of the data connections below can be used.

When reasonably possible, examples and features according to examples of the transform aspect can be combined with examples and features according to examples of the system aspect, and vice versa.

### Data connections

The transfer of the transform parameters and/or the system parameters from the capturing subsystem 110 and/or the tracking managing subsystem 111 to the rendering subsystem 120 can be achieved in various manners. For example, as seen in e.g. Fig. 1a, an RF link 901 between the transmitter 117 and the receiver 127 can be used. Such RF link is used to carry a video stream from the video camera 113 to the rendering subsystem 120. The set of blobs together with at least one of the transform parameters and/or with at least one of the system parameters can be embedded into an audio channel of the video stream on the RF link, or on any other wired or wireless media for data communication, such as a internet cable, a fiber cable for data communication, telecommunication systems for data communication, wifi, 3G, 4G, 5G, etc.

Again, with reference to Figure 1a, Figure 1b and Figure 1c, a data connection 901, such as a first data connection 901, can be established between the capturing subsystem 110, such as the transmitter 117, or the like, and the rendering subsystem 120. In some examples, the data connection 901 is an RF link.

Again, with reference to Figure 1a, Figure 1b, and Figure 1c, a data connection 903, such as a second data connection 903, can be established between the tracking managing subsystem 111, or the like, and the tracking assembly 115. In some examples, the data connection 903 is wired connection, such as a USB-connection, or the like.

Again, with reference to Figure 1a, Figure 1b, and Figure 1c, a data connection 905, such as a third data connection 905, can be established between the tracking managing subsystem 111, or the like, and the transmitter 117, or the like. In some examples, the data connection 905 is wired connection, such as a USB-connection, or the like.

With reference to Figure 1b, a data connection 906, such as a fourth data connection 906, can be established between the tracking managing subsystem 111 and the rendering subsystem 120. In some examples, the data connection 906 is wired connection, such as an ethernet cable, fiber cable, USB-cable, or the like.

With reference to Figure 1a, Figure 1b, and Figure 1c, a data connection 907, such as a fifth data connection 907, can be established between the video camera 113 and the transmitter 117. In some examples, the data connection 907 is wired connection, such as an ethernet cable, fiber cable, USB-cable, or the like.

With reference to Figure 1c, a data connection 908, such as a seventh data connection 908, can be established between the tracking managing subsystem 111 and the rendering subsystem 120. In some examples, the data connection 908 is wired connection, such as an ethernet cable, fiber cable, USB-cable, or the like.

With reference to Figure 1a, Figure 1b, and Figure 1c, a data connection 909, such as a seventh data connection 909, can be established between the video camera 113 and the tracking managing subsystem 111. In some examples, the data connection 908 is wired connection, such as an ethernet cable, fiber cable, USB-cable, or the like.

To conclude, in some examples, each one or more of the abovementioned connections can be a RF link for transfer of e.g. video and/or audio streams and/or video and/or audio channels. In some examples, each one or more of the abovementioned data connections can be a wired or wireless connection based on any one of more of the following technologies: wifi, cellular data, 3G, 4G, 5G, Bluetooth, zigbee, z-wave, ethernet cable, data cable, USB-cable, fiber cable, internal data bus, or the like. Various known data transfer protocols may be used, such as TCP/IP, UDM, UPD, or the like. Moreover, in the Figures 1a-1c, the arrows, denoting a respective data connection, indicate a primary direction of data transmitted on the respective data connection. In some examples, the respective data connection is capable of two-way communication, i.e. in both directions.

In particular, the data connections 901, 905, 906, 908 can be any one of:
- an audio channel in a video stream over a wireless RF network,
- an audio channel in a video stream over a WiFi wireless network,
- an audio channel in a video stream over a wireless telecommunication network, such as a cellular network, 4G, 5G, or the like,
- a common data network connection over a wireless WiFi network,
- a common data network data connection over a wireless telecommunication network, or even
- a combination of two or more thereof.

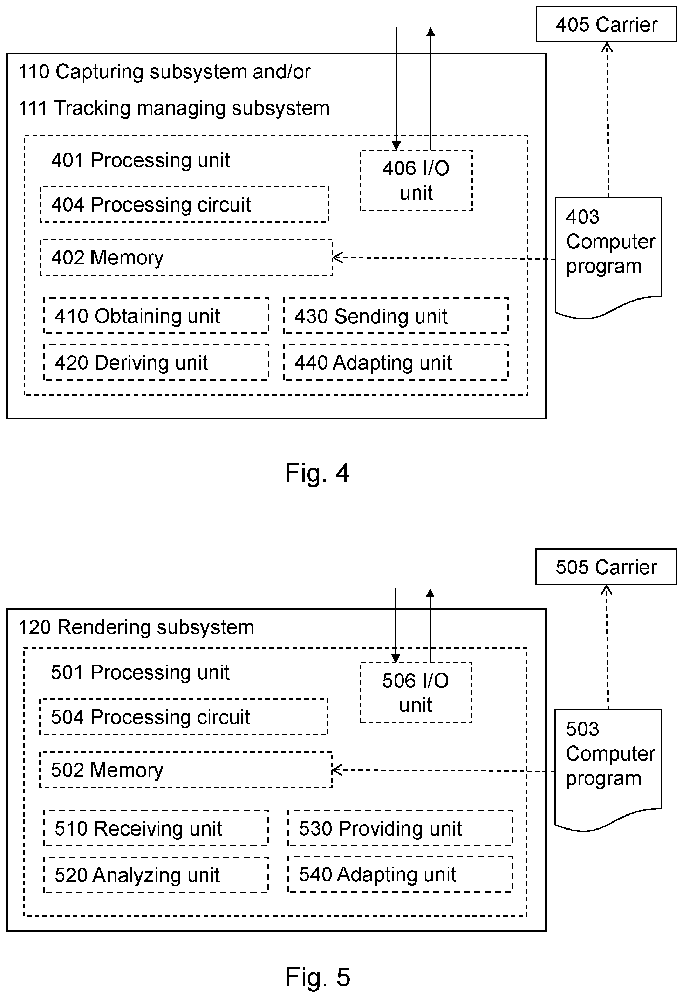

With reference to Figure 4, a schematic block diagram of embodiments of the tracking managing subsystem 111 of Figure 1a-1d is shown. This block diagram, or a similar one, can be applied to describe the capturing subsystem 110. Therefore, in the following tracking managing subsystem 111 can in some examples be replaced by the capturing subsystem 110.

The tracking managing subsystem 111 can include a processing unit 401 for performing the methods described herein. The processing unit can be embodied in the form of one or more hardware units and/or one or more software units. The term "unit" may thus refer to a circuit, a software block or the like according to various embodiments as described below.

The tracking managing subsystem 111 may further include a memory 402. The memory can include, such as contain or store, instructions, e.g., in the form of a computer program 403, which can include computer readable code units.

According to some embodiments herein, the tracking managing subsystem 111 and/or the processing unit 401 includes a processing circuit 404 as an exemplifying hardware unit, which can include one or more processors. Accordingly, the processing unit 401 may be embodied in the form of, or 'realized by', the processing circuit 404. The instructions may be executable by the processing circuit 404, whereby the tracking managing subsystem 111 is operative to perform the methods of Figure 2 and/or Figure 3. As another example, the instructions, when executed by the tracking managing subsystem 111 and/or the processing circuit 404, may cause the tracking managing subsystem 111 to perform the method according to Figure 2 and/or Figure 3.

In view of the above, in one example, there is provided a tracking managing subsystem 111 configured for providing blobs relating to tracking of a sports projectile. Again, the memory 402 contains the instructions executable by said processing circuit 404 whereby the tracking managing subsystem 111 is operative for performing one or more of action A110, A120, A130, and A140 and/or one or more of action B110, B120, B130, and B140.

Figure 4 further illustrates a carrier 405, or program carrier, which provides, such as comprises, mediates, supplies and the like, the computer program 403 as described directly above. The carrier 405 may be one of an electronic signal, an optical signal, a radio signal and a computer readable medium.

In some embodiments, the tracking managing subsystem 111 and/or the processing unit 401 may comprise one or more of an obtaining unit 410, an estimating unit 420, a determining unit 430, a receiving unit 440, a rendering unit 450, a calculating unit 460, as exemplifying hardware units. The term "unit" may refer to a circuit when the term "unit" refers to a hardware unit. In other examples, one or more of the aforementioned exemplifying hardware units may be implemented as one or more software units.

Moreover, the tracking managing subsystem 111 and/or the processing unit 401 may comprise an Input/Output unit 406, which may be exemplified by the receiving unit and/or the sending unit when applicable.

Accordingly, the tracking managing subsystem 111 is configured for providing blobs relating to tracking of a sports projectile. The tracking management subsystem 111 is communicatively connected to a tracking assembly 115.

Therefore, according to the various embodiments described above, the tracking managing subsystem 111 and/or the processing unit 401 and/or the obtaining unit 410 is configured for obtaining, from the tracking assembly 115, a tracking stream including tracking data maps, which are associated with timestamps. Each tracking data map of the tracking data maps is associated with a respective timestamp of the timestamps.

The tracking management subsystem 111 and/or the processing unit 401 and/or the obtaining unit 410, or another obtaining unit (not shown), is configured for obtaining a set of transform parameters. The set of transform parameters includes one of:
a tracking spatial parameter relating to translation and/or orientation of the tracking assembly 115,
a tracking focus parameter relating to focal length of the tracking assembly 115,
an exposure parameter relating at least one exposure setting of the tracking assembly 115, a lens model parameter relating to a model of a lens of the video camera 113,
a tracking sensor size parameter relating to a size of a detection sensor of the tracking assembly 115,
a resolution parameter relating to a resolution of a detection sensor of the tracking assembly 115,
a video spatial parameter relating to translation and/or orientation of a video camera 113. The tracking management subsystem 111 is communicatively connected to the video camera 113,
a video focus parameter relating to focal length of a video camera 113, wherein the tracking management subsystem 111 is communicatively connected to the video camera 113,
a video sensor size parameter relating to a size of an image sensor of the video camera 113, or
a combination of two or more thereof.

Each transform parameter of the set of transform parameters can be associated with one or more of said timestamps.

The tracking management subsystem 111 and/or the processing unit 401 and/or the deriving unit 420 is configured for deriving a set of blobs by applying a blob detection procedure to at least two tracking data maps of the tracking stream, while taking one or more transform parameters of the set of transform parameters into account and the associated one or more timestamps.

The tracking management subsystem 111 and/or the processing unit 401 and/or the sending unit 430 is configured for sending the set of blobs and the set of transform parameters, e.g. to a rendering subsystem 120, whereby e.g. adaption, performed by the rendering subsystem 120, of a transformation between the video camera 113 and the tracking assembly 115 based on the set of transform parameters is enabled.

Moreover, according to the system aspect, and according to the various embodiments described herein, the tracking managing subsystem 111 and/or the processing unit 401 and/or the obtaining unit 410 is configured for obtaining, from the tracking assembly 115, a tracking stream, which comprises tracking data maps.

The tracking managing subsystem 111 and/or the processing unit 401 and/or the obtaining unit 410 is configured for obtaining a set of system parameters. The set of system parameters includes one of:
a tracking managing subsystem processor-usage parameter relating to usage of one or more processors of the tracking managing subsystem 111,
a tracking managing subsystem temperature parameter relating to a temperature of the tracking managing subsystem 111,
a first power parameter relating power consumed by the tracking managing subsystem 111, a first voltage parameter relating to voltage over the tracking managing subsystem 111,
an error parameter indicating error messages from the tracking assembly 115 black frame, dropping frames, irregular frame rate, communication problems between tracking assembly 115 and the tracking managing subsystem 111, etc.,
a running processes parameter relating to number of running processes on the tracking managing subsystem 111,
a framerate parameter relating to framerate of the tracking assembly 115, e.g. camera framerate, or the like,
an exposure parameter relating at least one exposure setting of the tracking assembly 115, a port parameter relating to port connection information of the tracking managing subsystem 111, e.g. which physical connector ports are occupied, and which physical connector ports are available,
a radar frequency parameter relating to a radar frequency of the tracking assembly 115,
a continuous wave CW parameter relating to radar CW disturbance of the tracking assembly 115,
a tracking assembly processor-usage parameter relating usage of one or more processors of the tracking assembly 115,
a tracking assembly temperature parameter relating a temperature of the tracking assembly 115,
a second power parameter relating power consumed by the tracking assembly 115,
a second voltage parameter relating to voltage over the tracking assembly 115, or a combination of two or more thereof,

The tracking managing subsystem 111 and/or the processing unit 401 and/or the deriving unit 420 is configured for deriving a set of blobs by applying a blob detection procedure to at least two tracking data maps of the tracking stream.

The tracking managing subsystem 111 and/or the processing unit 401 and/or the sending unit 430 is configured for sending the set of blobs and the set of system parameters, e.g. to a rendering subsystem 120, whereby e.g. fault management by the rendering subsystem 120 is enabled.

With reference to Figure 5, a schematic block diagram of embodiments of the rendering subsystem 120 Figure 1a through Figure 1d is shown.

The rendering subsystem 120can include a processing unit 501 for performing the methods described herein. The processing unit can be embodied in the form of one or more hardware units and/or one or more software units. The term "unit" may thus refer to a circuit, a software block or the like according to various embodiments as described below.

The rendering subsystem 120 may further include a memory 502. The memory can include, such as contain or store, instructions, e.g., in the form of a computer program 503, which can include computer readable code units.

According to some embodiments herein, the rendering subsystem 120 and/or the processing unit 501 includes a processing circuit 504 as an exemplifying hardware unit, which can include one or more processors. Accordingly, the processing unit 501 may be embodied in the form of, or 'realized by', the processing circuit 504. The instructions may be executable by the processing circuit 504, whereby rendering subsystem 120 is operative to perform the methods of Figure 2 and/or Figure 3. As another example, the instructions, when executed by the rendering subsystem 120 and/or the processing circuit 504, may cause the rendering subsystem 120 to perform the method according to Figure 2 and/or Figure 3.

In view of the above, in one example, there is provided a rendering subsystem 120 configured for managing faults relating to the tracking managing subsystem 111 and/or the tracking assembly 115.

Again, the memory 502 contains the instructions executable by said processing circuit 504 whereby the rendering subsystem 120 is operative for performing one or more of action A145 and A150 and/or one or more of action B145, B150, and B160.

Figure 5 further illustrates a carrier 505, or program carrier, which provides, such as comprises, mediates, supplies and the like, the computer program 503 as described directly above. The carrier 505 may be one of an electronic signal, an optical signal, a radio signal and a computer readable medium.

In some embodiments, the rendering subsystem 120 and/or the processing unit 501 may comprise one or more of a receiving unit 510, an analyzing unit 520, and a providing unit 530, as exemplifying hardware units. The term "unit" may refer to a circuit when the term "unit" refers to a hardware unit. In other examples, one or more of the aforementioned exemplifying hardware units may be implemented as one or more software units.

Moreover, the rendering subsystem 120 and/or the processing unit 501 may comprise an Input/Output unit 506, which may be exemplified by the receiving unit and/or the sending unit when applicable.

Accordingly, the rendering subsystem 120 is configured for managing faults relating to the tracking managing subsystem 111 and a tracking assembly 115 communicatively connected thereto.

In some examples, the tracking managing subsystem 111 is included in a video communication system 100, which includes the rendering subsystem 120.

The rendering subsystem 120 and/or the processing unit 501 and/or the analyzing unit 520 may be configured for analyzing one or more system parameters of the set of system parameters to obtain one or more instructions concerning corrective actions, being reactive or proactive, to be performed, e.g. by the tracking managing subsystem 111.

The rendering subsystem 120 and/or the processing unit 501 and/or the providing unit 530 may be configured for providing said one or more instructions, e.g. to an operator of the video communication system 100, the tracking managing subsystem 111, or the like.

In some embodiments, the rendering subsystem 120 and/or the processing unit 501 and/or the analyzing unit 520 may be analyzing said one or more system parameters by comparing said one or more system parameters to one or more respective thresholds and determining said one or more instructions based on the comparison of said one or more system parameters to said one or more respective thresholds.

In some examples, the tracking management subsystem 111 is comprised in a video communication system 100. The video communication system 100 comprises the rendering subsystem 120. The video communication system 100 comprises a video camera 113 or the video camera 113, when the set of transform parameters comprises the video spatial parameter and/or the video focus parameter, wherein a transformation is defined for transformation between a tracking coordinate system C1 of the tracking assembly 115 and a video coordinate system C2 of the video camera 113.

The video communication system 100 and/or the rendering subsystem 120 and/or the processing unit 501 and/or the adapting unit 540 may be configured for adapting, the transformation based on one or more transform parameters of the set of transform parameters to obtain an adapted transformation e.g. applicable in connection with said one or more timestamps.

It can be noted that a radar and/or a lidar can output data in a format that is analogous to pixels, especially when used for imaging purposes. This data is often referred to as radar images, radar maps, or the like. The data can sometimes be referred to as a point cloud in two or three dimensions, where each point can represent an observation, or a pixel. A pixel or observation, in this context, can thus refer to intensity, signal strength, azimuth, elevation, phase, distance, etc. The observation can indicate a potential sports projectile, i.e. true positive or false positive, noise, or the like.

Examples of algorithms for detecting the motion of a device, such as a video camera, a tracking assembly, a camera, or the like, include, but are not limited to, e.g.: Optical Flow: This method tracks the movement of pixels between consecutive frames to estimate motion. It analyzes the displacement of pixels in an image sequence, helping to determine the direction and magnitude of camera motion. Feature Matching: Key points or features (like corners or edges) are detected in successive frames. By matching these features across frames, the algorithm can estimate camera motion by observing how the positions of these features change over time. Visual-Inertial Odometry (VIO): This combines visual data from the camera with inertial data from sensors like accelerometers, gyroscopes, inertial measurement units (IMUs) and/or the like. By fusing this data, VIO can provide a more accurate estimate of camera motion, particularly in environments with poor visual features. egomotion estimation: This technique calculates the camera's motion relative to the environment by analyzing changes in the geometry of the scene, often using geometric transformations between consecutive frames to estimate the camera's movement.

As used herein, the term "unit" may refer to one or more functional units, each of which may be implemented as one or more hardware units and/or one or more software units and/or a combined software/hardware unit in a node. In some examples, the unit may represent a functional unit realized as software and/or hardware of the node.

As used herein, the term "computer program carrier", "program carrier", or "carrier", may refer to one of an electronic signal, an optical signal, a radio signal, and a computer readable medium. In some examples, the computer program carrier may exclude transitory, propagating signals, such as the electronic, optical and/or radio signal. Thus, in these examples, the computer program carrier may be a non-transitory carrier, such as a non-transitory computer readable medium.

As used herein, the term "processing unit" may include one or more hardware units, one or more software units or a combination thereof. Any such unit, be it a hardware, software or a combined hardware-software unit, may be a determining means, estimating means, capturing means, associating means, comparing means, identification means, selecting means, receiving means, sending means or the like as disclosed herein. As an example, the expression "means" may be a unit corresponding to the units listed above in conjunction with the Figures.

As used herein, the term "software unit" may refer to a software application, a Dynamic Link Library (DLL), a software component, a software module, a software object, a React component, an object according to Component Object Model (COM), a software function, a software engine, an executable binary software file or the like.

The terms "processing unit" or "processing circuit" may herein comprise one or more processors, an Application Specific Integrated Circuit (ASIC), a Field-Programmable Gate Array (FPGA) or the like. The processing circuit or the like may comprise one or more processor kernels.

As used herein, the expression "configured to/for" can refer to that a processing circuit can be configured to, such as adapted to or operative to, by means of software configuration and/or hardware configuration, perform one or more of the actions described herein.

As used herein, the term "action" may refer to an action, a step, an operation, a response, a reaction, an activity or the like. It shall be noted that an action herein may be split into two or more sub-actions as applicable. Moreover, also as applicable, it shall be noted that two or more of the actions described herein may be merged into a single action.

As used herein, the term "memory" may refer to a hard disk, a magnetic storage medium, a portable computer diskette or disc, flash memory, random access memory (RAM) or the like. Furthermore, the term "memory" may refer to an internal register memory of a processor or the like.

As used herein, the term "computer readable medium" may be a Universal Serial Bus (USB) memory, a Digital Versatile Disc (DVD), a Blu-ray disc, a software unit that is received as a stream of data, a Flash memory, a hard drive, a memory card, such as a MemoryStick, a Multimedia Card (MMC), Secure Digital (SD) card, etc. One or more of the aforementioned examples of computer readable medium may be provided as one or more computer program products.

As used herein, the term "computer readable code units" may be text of a computer program, parts of or an entire binary file representing a computer program in a compiled format or anything there between.

Any feature disclosed for one example and/or embodiment may be combined with one or more features disclosed for one or more other examples and/or embodiments without departing from the scope herein.

Examples: Although the present application is defined in the attached claims, it should be understood that the present invention can also be (alternatively) defined in accordance with the following examples:
Example 1: A method, performed by a tracking managing subsystem (111), for enabling management of faults relating to the tracking managing subsystem (111) and a tracking assembly (115) communicatively connected thereto, wherein the method comprises:
   obtaining (B110), from the tracking assembly (115), a tracking stream, which comprises tracking data maps,
   obtaining (B120) a set of system parameters, wherein the set of system parameters includes one of:
      - a tracking managing subsystem processor-usage parameter relating to usage of one or more processors of the tracking managing subsystem (111),
      - a tracking managing subsystem temperature parameter relating to a temperature of the tracking managing subsystem (111),
      - a first power parameter relating power consumed by the tracking managing subsystem (111),
      - a first voltage parameter relating to voltage over the tracking managing subsystem (111),
      - an error parameter indicating error messages between tracking assembly (115) and the tracking managing subsystem (111),
      - a running processes parameter relating to number of running processes on the tracking managing subsystem (111),
      - a framerate parameter relating to framerate of the tracking assembly (115),
      - an exposure parameter relating at least one exposure setting of the tracking assembly (115),
      - a port parameter relating to port connection information of the tracking managing subsystem (111),
      - a radar frequency parameter relating to a radar frequency of the tracking assembly (115),
      - a continuous wave (CW) parameter relating to radar CW disturbance of the tracking assembly (115),
      - a tracking assembly processor-usage parameter relating usage of one or more processors of the tracking assembly (115),
      - a tracking assembly temperature parameter relating a temperature of the tracking assembly (115),
      - a second power parameter relating power consumed by the tracking assembly (115),
      - a second voltage parameter relating to voltage over the tracking assembly (115), or
      - a combination of two or more thereof,
   deriving (B130) a set of blobs by applying a blob detection procedure to at least two tracking data maps of the tracking stream, and
   sending (B140) the set of blobs and the set of system parameters.
Example 2: The method according to Example 1, wherein the method is performed by a video communication system (100), wherein the video communication system (100) comprises the rendering subsystem (120), wherein the method comprises:
   analyzing (B150), by the rendering subsystem (120), one or more system parameters of the set of system parameters to obtain one or more instructions concerning corrective actions, being reactive or proactive, to be performed, and
   providing (B160), by the rendering subsystem (120), said one or more instructions.
Example 3: The method according to the preceding Example, wherein the analyzing (B150) of said one or more system parameters comprises comparing said one or more system parameters to one or more respective thresholds and determining said one or more instructions based on the comparison of said one or more system parameters to said one or more respective thresholds.
Example 4: The method according to any one of the preceding Examples, wherein the set of system parameters includes the tracking managing subsystem processor-usage parameter. Example 5: The method according to any one of the preceding examples, wherein the set of system parameters includes the tracking managing subsystem temperature parameter.
Example 6: The method according to any one of the preceding examples, wherein the set of system parameters includes the first power parameter.
Example 7: The method according to any one of the preceding examples, wherein the set of system parameters includes the first voltage parameter.
Example 8: The method according to any one of the preceding examples, wherein the set of system parameters includes the error parameter.
Example 9: The method according to any one of the preceding examples, wherein the set of system parameters includes the running processes parameter.
Example 10: The method according to any one of the preceding examples, wherein the set of system parameters includes the framerate parameter.
Example 11: The method according to any one of the preceding examples, wherein the set of system parameters includes the exposure parameter.
Example 12: The method according to any one of the preceding examples, wherein the set of system parameters includes the port parameter.
Example 13: The method according to any one of the preceding examples, wherein the set of system parameters includes the radar frequency parameter.
Example 14: The method according to any one of the preceding examples, wherein the set of system parameters includes the continuous wave (CW) parameter.
Example 15: The method according to any one of the preceding examples, wherein the set of system parameters includes the tracking assembly processor-usage parameter.
Example 16: The method according to any one of the preceding examples, wherein the set of system parameters includes the tracking assembly temperature parameter.
Example 17: The method according to any one of the preceding examples, wherein the set of system parameters includes the second power parameter.
Example 18: The method according to any one of the preceding examples, wherein the set of system parameters includes the second voltage parameter.
Example 19: A tracking managing subsystem (111) configured for enabling management of faults relating to the tracking managing subsystem (111) and a tracking assembly (115) communicatively connected thereto, wherein the tracking managing subsystem (111) is configured for:
   obtaining, from the tracking assembly (115), a tracking stream, which comprises tracking data maps,
   obtaining a set of system parameters, wherein the set of system parameters includes one of:
      - a tracking managing subsystem processor-usage parameter relating to usage of one or more processors of the tracking managing subsystem (111),
      - a tracking managing subsystem temperature parameter relating to a temperature of the tracking managing subsystem (111),
      - a first power parameter relating power consumed by the tracking managing subsystem (111),
      - a first voltage parameter relating to voltage over the tracking managing subsystem (111),
      - an error parameter indicating error messages from the tracking assembly (115) (black frame, dropping frames, irregular frame rate, communication problems between tracking assembly (115) and the tracking managing subsystem (111), etc.,
      - a running processes parameter relating to number of running processes on the tracking managing subsystem (111),
      - a framerate parameter relating to framerate of the tracking assembly (115),
      - an exposure parameter relating at least one exposure setting of the tracking assembly (115),
      - a port parameter relating to port connection information of the tracking managing subsystem (111), e.g. which physical connector ports are occupied, and which physical connector ports are available,
      - a radar frequency parameter relating to a radar frequency of the tracking assembly (115),
      - a continuous wave (CW) parameter relating to radar CW disturbance of the tracking assembly (115),
      - a tracking assembly processor-usage parameter relating usage of one or more processors of the tracking assembly (115),
      - a tracking assembly temperature parameter relating a temperature of the tracking assembly (115),
      - a second power parameter relating power consumed by the tracking assembly (115),
      - a second voltage parameter relating to voltage over the tracking assembly (115), or
      - a combination of two or more thereof,
   deriving a set of blobs by applying a blob detection procedure to at least two tracking data maps of the tracking stream, and
   sending the set of blobs and the set of system parameters.
Example 20: The tracking managing subsystem (111) according to example 19, wherein the tracking managing subsystem (111) is included in a video communication system (100), which includes a rendering subsystem (120), wherein the rendering subsystem (120) is configured for:
   analyzing one or more system parameters of the set of system parameters to obtain one or more instructions concerning corrective actions, being reactive or proactive, to be performed, and
   providing said one or more instructions.
Example 21: The tracking managing subsystem (111) according to example 20, wherein the rendering subsystem (120) is configured for analyzing said one or more system parameters by comparing said one or more system parameters to one or more respective thresholds and determining said one or more instructions based on the comparison of said one or more system parameters to said one or more respective thresholds.
Example 22: A computer program (403), comprising computer readable code units which when executed on a tracking managing subsystem (111) causes the tracking managing subsystem (111) to perform the method according to any one of examples 1-18.
Example 23: A rendering subsystem (120) configured to perform a set of actions of the method according to any one of examples 1-18, wherein the set of actions are performed by the rendering subsystem (120).

## Claims

1. A method, performed by a tracking managing subsystem (111), for enabling management of faults relating to the tracking managing subsystem (111) and a tracking assembly (115) communicatively connected thereto, wherein the method comprises:
obtaining (B110), from the tracking assembly (115), a tracking stream, which comprises tracking data maps,
obtaining (B120) a set of system parameters, wherein the set of system parameters includes one of:
a first voltage parameter relating to voltage over the tracking managing subsystem (111),
an error parameter indicating error messages between the tracking assembly (115) and the tracking managing subsystem (111),
a framerate parameter relating to framerate of the tracking assembly (115),
an exposure parameter relating to at least one exposure setting of the tracking assembly (115),
a port parameter relating to port connection information of the tracking managing subsystem (111),
a radar frequency parameter relating to a radar frequency of the tracking assembly (115),
a continuous wave (CW) parameter relating to radar CW disturbance of the tracking assembly (115),
a second voltage parameter relating to voltage over the tracking assembly (115), or
a combination of two or more thereof,
deriving (B130) a set of blobs by applying a blob detection procedure to at least two tracking data maps of the tracking stream, and
sending (B140) the set of blobs and the set of system parameters to a rendering subsystem at which the set of system parameters are processed, thereby enabling fault management by the rendering subsystem.

2. The method according to claim 1, wherein the method is performed by a video communication system (100), wherein the video communication system (100) comprises the rendering subsystem (120), wherein the method comprises:
analyzing (B150), by the rendering subsystem (120), one or more system parameters of the set of system parameters to obtain one or more instructions concerning corrective actions, being reactive or proactive, to be performed, and
providing (B160), by the rendering subsystem (120), the one or more instructions.

3. The method according to the preceding claim, wherein the analyzing (B150) of the one or more system parameters comprises comparing the one or more system parameters to one or more respective thresholds and determining the one or more instructions based on the comparison of the one or more system parameters to the one or more respective thresholds.

4. The method according to any one of the preceding claims, wherein the set of system parameters includes the first voltage parameter.

5. The method according to any one of the preceding claims, wherein the set of system parameters includes the error parameter.

6. The method according to any one of the preceding claims, wherein the set of system parameters includes the framerate parameter.

7. The method according to any one of the preceding claims, wherein the set of system parameters includes the exposure parameter.

8. The method according to any one of the preceding claims, wherein the set of system parameters includes the port parameter.

9. The method according to any one of the preceding claims, wherein the set of system parameters includes the radar frequency parameter.

10. The method according to any one of the preceding claims, wherein the set of system parameters includes the continuous wave (CW) parameter.

11. The method according to any one of the preceding claims, wherein the set of system parameters includes the second voltage parameter.

12. A tracking managing subsystem (111) configured for enabling management of faults relating to the tracking managing subsystem (111) and a tracking assembly (115) communicatively connected thereto, wherein the tracking managing subsystem (111) is configured to perform operations according to the method of any one of claim 1 to 11.

13. A method performed by a rendering subsystem (120), the method comprising:
obtaining one or more system parameters of a set of system parameters comprising at least one of:
a first voltage parameter relating to voltage over a tracking managing subsystem (111),
an error parameter indicating error messages between a tracking assembly (115) and the tracking managing subsystem (111),
a framerate parameter relating to framerate of the tracking assembly (115),
an exposure parameter relating to at least one exposure setting of the tracking assembly (115),
a port parameter relating to port connection information of the tracking managing subsystem (111),
a radar frequency parameter relating to a radar frequency of the tracking assembly (115),
a continuous wave (CW) parameter relating to radar CW disturbance of the tracking assembly (115), or
a second voltage parameter relating to voltage over the tracking assembly (115),
analyzing (B150) the one or more system parameters to obtain one or more instructions concerning corrective actions, being reactive or proactive, to be performed, and
providing (B160), by the rendering subsystem (120), the one or more instructions to be performed by an operator of the rendering subsystem (120) or the tracking managing subsystem (111).

14. The method of claim 13, wherein analyzing (B150) the one or more system parameters comprises comparing the one or more system parameters to one or more respective thresholds and determining the one or more instructions based on the comparison of the one or more system parameters to the one or more respective thresholds.

15. A rendering subsystem (120) configured to perform the method according to any one of claims 13 or 14.
